# EUROPÄISCHE PATENTANMELDUNG

(11) **EP 4 778 725 A1**
(43) Veröffentlichungstag der Anmeldung: **22.07.2026**
(21) Anmeldenummer: 25152795.8
(22) Anmeldetag: 20.01.2025
(51) Int. Cl.: B33Y 30/00, B41F 15/18, B29C 64/245, B22F 12/30

(54) **WERKSTÜCKTRÄGER SOWIE VERFAHREN ZUR HERSTELLUNG VON DREIDIMENSIONALEN SIEBDRUCKWERKSTÜCKEN**

(71) Anmelder: Exentis Knowledge GmbH, 5608 Stetten AG (CH)
(72) Erfinder: REICHENBACH, Michael, 79183 Waldkirch (DE); CLOOTS, Michael, 9008 St.Gallen (CH); WIRTH, Florian, 8903 Birmensdorf (CH)
(74) Vertreter: Wenzel Nemetzade Warthmüller Patentanwälte Part mbB

(57) **Zusammenfassung**

Die Offenbarung betrifft die additive Fertigung von dreidimensionalen Werkstücken mittels Siebdruck. Um den Siebdruck dreidimensionaler Siebdruckwerkstücke (50) zu vereinfachen, werden diese auf eine Druckfolie (40) gedruckt.

## Beschreibung

Die vorliegende Erfindung betrifft einen Werkstückträger, insbesondere für die Herstellung dreidimensionaler Siebdruckwerkstücke. Ebenso betrifft die vorliegende Erfindung eine Tragstruktur, insbesondere für einen solchen Werkstückträger, sowie eine Klemmvorrichtung, insbesondere für eine solche Tragstruktur. Schließlich betrifft die Erfindung auch einen Nachrüstsatz für eine solche Tragstruktur sowie auch ein Verfahren zur Herstellung von dreidimensionalen Werkstücken mittels Siebdruck.

Siebdruck wird nicht nur zur Erstellung von zweidimensionalen, also flächigen, Bildern, sondern auch zur Erstellung von dreidimensionalen Werkstücken verwendet. Siebdruckwerkstücke werden dabei auf Druckbetten aufgedruckt, wobei mit Siebdruck nacheinander mehrere Schichten auf das Druckbett gedruckt werden, um ein dreidimensionales Siebdruckwerkstück herzustellen.

Druckbetten sind Platten, die beispielsweise eine metallische Oberfläche haben. Zwischen dem Druckbett und den Werkstücken wirkt beim Siebdruck der Werkstücke eine Haftkraft, die ein ungewünschtes Verrutschen der teilweise gedruckten Siebdruckwerkstücke auf dem Druckbett während des Siebdrucks verhindert. Ist die Haftkraft jedoch zu groß, kommt es vor, dass die Siebdruckwerkstücke nach dem Siebdruck nicht zerstörungsfrei vom Druckbett gelöst werden können.

Vor dem oben dargelegten Hintergrund bestand die Aufgabe der Erfindung darin, den für den Siebdruck von dreidimensionalen Werkstücken benötigten Aufwand und die Gefahr der Produktion von Ausschuss zu verringern.

Diese Aufgabe ist durch einen Werkstückträger gemäß Anspruch 1 gelöst worden. In Bezug auf eine Tragstruktur ist diese Aufgabe durch den Gegenstand gemäß Anspruch 14 gelöst worden. In Bezug auf das Verfahren ist diese Aufgabe durch den Gegenstand von Anspruch 15 gelöst worden. Vorteilhafte Weiterbildungen sind in den jeweiligen Unteransprüchen angegeben und werden nachfolgend erläutert.

Ein erfindungsgemäßer Werkstückträger ist insbesondere ein Werkstückträger für die Herstellung dreidimensionaler Siebdruckwerkstücke. Der Werkstückträger weist eine flexible Druckfolie, die eine mit dreidimensionalen Siebdruckwerkstücken bedruckbare Druckfläche aufweist, eine die Druckfolie zumindest abschnittsweise tragende Tragstruktur und zumindest eine Klemmvorrichtung zur kraftschlüssigen Halterung der Druckfolie an und/oder auf der Tragstruktur auf.

Die auf die Druckfolie gedruckten dreidimensionalen Siebdruckwerkstücke sind leicht von der Druckfolie zu lösen, da die Druckfolie nicht wie das Druckbett starr, sondern flexibel und damit ohne weiteres verformbar ist, sodass die Siebdruckwerkstücke mit nur geringem Aufwand durch ein Umformen der Druckfolie von dieser ablösbar sein können. Gleichzeitig kann eine solche Druckfolie mit nur geringem Kostenaufwand bereitgestellt und bei erfindungsgemäßer Ausgestaltung eines Werkstückträgers, einer Tragstruktur und/oder eine Klemmvorrichtung mit nur geringem Handhabungsaufwand für das Bedrucken auf einem Werkstückträger befestigt und/oder festgespannt beziehungsweise aufgespannt werden.

Unter einer flexiblen Druckfolie kann hier verstanden werden, dass die Druckfolie biegeschlaff ist. Eine flexible Druckfolie kann insbesondere bereits unter Eigengewicht Verformungen annehmen und/oder abschnittsweise aufgrund der Gewichtskraft herunterhängen, sofern keine Stützung oder kein Halt für die jeweiligen Abschnitte vorgesehen sind. Eine flexible Druckfolie kann vorliegend insbesondere aus einem Kunststoffmaterial und/oder einem Metallwerkstoff und/oder aus Zellulose bestehen und/oder hergestellt sein.

Die weiteren erfindungsgemäßen Gegenstände, insbesondere der erfindungsgemäße Werkstückträger, die erfindungsgemäße Tragstruktur sowie die erfindungsgemäße Klemmvorrichtung und auch das erfindungsgemäße Verfahren, wie nachfolgend noch im Einzelnen beschrieben, können durch verschiedene, jeweils für sich vorteilhafte und, sofern nicht anders ausgeführt, beliebig miteinander kombinierbare Ausgestaltungen weiter verbessert werden. Auf die vorteilhaften Ausführungsformen und auch auf die mit ihnen verbundenen Vorteile wird im Folgenden näher eingegangen.

Die jeweiligen Einzelheiten und Vorteile betreffend den Werkstückträger, die erfindungsgemäße Tragstruktur sowie die erfindungsgemäße Klemmvorrichtung und auch das erfindungsgemäße Verfahren gelten gleichermaßen auch für die jeweils anderen erfindungsgemäßen Gegenstände beziehungsweise Kategorien.

In vorteilhafter Weise kann eine flexible Druckfolie eine Materialstärke von bis zu 25 µm, bevorzugt bis zu 50 µm, bevorzugt bis zu 75 µm, bevorzugt bis zu 100 µm, bevorzugt bis zu 150 µm, bevorzugt bis zu 200 µm, weiter bevorzugt bis zu 250 µm, bevorzugt bis zu 300 µm, bevorzugt bis zu 500 µm, bevorzugt bis zu 750 µm, bevorzugt bis zu 900 µm, bevorzugt bis zu 1 mm, bevorzugt bis zu 2 mm, bevorzugt bis zu 3 mm aufweisen.

In weiter vorteilhafter Weise kann eine flexible Druckfolie eine Materialstärke von mehr als 25 µm, bevorzugt mehr als 50 µm, bevorzugt mehr als 75 µm, bevorzugt mehr als 100 µm, bevorzugt mehr als 150 µm, bevorzugt mehr als 200 µm, weiter bevorzugt mehr als 250 µm, bevorzugt mehr als 300 µm, bevorzugt mehr als 500 µm, bevorzugt mehr als 750 µm, bevorzugt mehr als 900 µm, bevorzugt mehr als 1 mm, bevorzugt mehr als 2 mm, bevorzugt mehr als 3 mm aufweisen.

Gemäß einer bevorzugten Ausführungsform kann die Druckfolie mehrere laterale Seiten aufweisen, wobei eine der lateralen Seiten der Druckfolie an der Klemmvorrichtung kraftschlüssig gehalten sein kann. Ein Vorteil einer solchen Ausführungsform kann sein, dass die Klemmvorrichtung die Druckfolie ohne weiteres wieder lösbar halten kann und gleichzeitig ausreichend nutzbare Druckfläche auf der Druckfolie zur Verfügung bleibt. Beispielswiese kann die Klemmvorrichtung ein freies Ende einer Druckfolie halten und einen Druckabschnitt der Druckfolie in der Druckposition halten. Ein anderer Abschnitt der Druckfolie kann auf einer Druckfolienrolle angeordnet oder in einer weiteren Klemmvorrichtung gehalten sein.

In bevorzugter Weise kann die Klemmvorrichtung als Klemmleiste ausgebildet sein oder zwei unterschiedliche Klemmvorrichtungen können jeweils als Klemmleisten ausgebildet sein.

Der Druckabschnitt kann zwischen der Klemmvorrichtung und der Druckfolienrolle angeordnet und von der Druckfolienrolle und der Klemmvorrichtung in der Druckposition gespannt gehalten sein. Ebenso kann der Druckabschnitt zwischen zwei unterschiedlichen Klemmvorrichtungen verlaufen und in der Druckposition gespannt gehalten sein. In der Druckposition kann die Druckfolie auf dem Druckbett aufliegen.

Wenigstens eine Klemmvorrichtung kann an einer lateralen Seite des in der Druckposition gehaltenen Druckfolienabschnitts angeordnet und an der lateralen Seite der Druckfolie kraftschlüssig befestigt sein. Sind zwei Klemmvorrichtungen vorgesehen, kann eine der Klemmvorrichtungen an einer der lateralen Seiten und die andere der Klemmvorrichtungen an gegenüberliegenden der lateralen Seiten kraftschlüssig befestigt sein.

Gemäß einer weiteren Ausführungsform kann der Werkstückträger eine Mehrzahl von Klemmvorrichtungen, insbesondere zwei Klemmvorrichtungen, zur kraftschlüssigen Halterung der Druckfolie an und/oder auf der Tragstruktur aufweisen, wobei die Klemmvorrichtungen bevorzugt eine Klemmanordnung zur kraftschlüssigen Halterung der Druckfolie an und/oder auf der Tragstruktur bilden und/oder wobei die Druckfolie bevorzugt zwischen den Klemmvorrichtungen verläuft. Hierdurch kann eine besonders sichere und genaue Befestigung der Druckfolie gewährleistet werden.

Bevorzugt kann die eine der lateralen Seiten der Druckfolie an einer der Klemmvorrichtungen und eine andere der lateralen Seiten der Druckfolie an der anderen der Klemmvorrichtungen kraftschlüssig gehalten sein. Ein Vorteil einer solchen Ausführungsform kann sein, dass die Druckfolie, auch wenn diese zum Bedrucken als Druckfolienblatt bereitgestellt ist, durch zwei Klemmvorrichtungen präziser gehalten sein kann. Die Klemmvorrichtungen können so zueinander um die Druckfolie angeordnet sein, dass die Klemmvorrichtungen die Druckfolie eben ausrichten und halten. Beispielsweise können die Klemmvorrichtungen rotationssymmetrisch und beispielsweise an wenigstens zwei Seiten der Druckfolie um die Druckfolie herum angeordnet sein.

Gemäß einer weiteren Ausführungsform kann die zumindest eine Klemmvorrichtung bewegbar relativ zur Tragstruktur mit der Tragstruktur verbunden sein. Ein Vorteil einer solchen Ausführungsform kann sein, dass die Druckfolie präzise bezüglich zur Tragstruktur ausgerichtet werden kann.

Ebenfalls kann die oder zumindest eine Klemmvorrichtung unbeweglich relativ zur Tragstruktur mit der Tragstruktur verbunden sein. Dies kann einen insgesamt einfachen und robusten Aufbau sicherstellen.

Gemäß einer weiteren Ausführungsform kann die Tragstruktur einen Tragboden und ein Druckbett zur Ablage der Druckfolie aufweisen, wobei das Druckbett auf dem Tragboden angeordnet sein kann. Das Druckbett kann gesondert oder separat von dem Tragboden ausgebildet und/oder in den Tragboden eingesetzt sein. Ein Vorteil einer solchen Ausführungsform kann sein, dass nicht die gesamte Tragstruktur, sondern nur das Druckbett zur Ablage der Druckfolie bei deren Bedruckung geeignet zu sein braucht, was die Kosten für die gesamte Tragstruktur verringern kann und einen genau definierten Druckbereich sicherstellt.

Gemäß einer weiteren Ausführungsform kann die Tragstruktur einen Tragboden aufweisen und ein Druckbett kann einstückig mit dem Tragboden ausgebildet sein. Dies gewährleistet einen besonders einfachen und robusten Aufbau.

Gemäß einer weiteren Ausführungsform kann das Druckbett eine Auflageseite, die auf dem Tragboden aufliegt, und eine von dem Tragboden weg weisende Ablageseite aufweisen, wobei in der Ablageseite bevorzugt Vakuumöffnungen vorgesehen sein können, um die Druckfolie mittels Vakuum anzusaugen. Ferner können sich Vakuumöffnungen bevorzugt zwischen der Ablageseite und der Auflageseite erstrecken, um die Druckfolie mittels Vakuum anzusaugen. Ein Vorteil einer solchen Ausgestaltung kann sein, dass beim Bedrucken ungewollte Bewegungen der Druckfolie noch besser verhindert werden können. Optional kann durch die Vakuumöffnungen sogar auf ein Gespannthalten der Druckfolie durch die Klemmvorrichtung oder die Klemmvorrichtungen während des Siebdrucks verzichtet werden.

Gemäß einer weiteren Ausführungsform können die Vakuumöffnungen in und/oder quer zur Spannrichtung gleich und/oder unterschiedlich weit zueinander beabstandet angeordnet sein. Ein Vorteil einer solchen Ausführungsform kann sein, dass die Druckfolie in unterschiedlichen Bereichen unterschiedlich stark angesaugt werden kann, um die Druckfolie noch besser gegen ungewollte Bewegungen zu sichern. Beispielsweise können in einem Bereich, auf dem im Betrieb Randbereiche der Druckfolie aufliegen, die Vakuumöffnungen mit einer höheren Flächendichte vorgesehen sein, als in einem Bereich, in dem ein mittlerer Bereich der Druckfolie im Betrieb aufliegt.

Gemäß einer weiteren Ausführungsform können die Vakuumöffnungen in ihrem Verlauf einen zunehmenden Querschnitt aufweisen. Insbesondere kann der Querschnitt in Richtung auf die zum Tragboden weisenden Seite des Druckbetts zunehmen. Ein Vorteil einer solchen Ausführungsform kann sein, dass das Vakuum schnell ausreichend herstellbar und/oder aufrechterhaltbar ist, wobei auf der Auflageseite nur kleine Unterbrechungen der Auflagefläche des Druckbetts vorhanden sind.

Gemäß einer weiteren Ausführungsform kann die Tragstruktur eine Spannvorrichtung zum Spannen der Druckfolie in eine Spannrichtung aufweisen. Ein Vorteil einer solchen Ausführungsform kann sein, dass die gespannte Druckfolie während des Siebdrucks weniger beweglich und genauer in ihrer Lage definiert ist.

Eine Spannrichtung kann entlang oder parallel zu einer Ebenenerstreckung des Druckbetts und/oder der Tragstruktur und/oder des Tragbodens oder quer zu einer Dickenrichtung des Druckbetts und/oder der Tragstruktur und/oder des Tragbodens verlaufen.

Gemäß einer weiteren Ausführungsform kann die Spannvorrichtung an dem Tragboden angeordnet sein. Die Spannvorrichtung und der Tragboden können mithin eine Baugruppe bilden. Ein Vorteil einer solchen Ausführungsform kann sein, dass der Tragboden und die mit dem Tragboden verbundene Spannvorrichtung mit nur geringem herzustellen ist und eine unmittelbare Verbindung der Spannvorrichtung mit dem Druckbett nicht zwingend erforderlich ist.

Gemäß einer weiteren Ausführungsform kann die Spannvorrichtung relativ zum Druckbett bewegbar mit dem Tragboden verbunden sein. Die zumindest eine Klemmvorrichtung kann bewegungsübertragend mit der Spannvorrichtung verbunden oder verbindbar sein. Ein Vorteil einer solchen Ausführungsform kann sein, dass die in der Klemmvorrichtung eingespannte Druckfolie einfach relativ zum Druckbett ausrichtbar sein und dabei auch gespannt gehalten werden kann.

Gemäß einer weiteren Ausführungsform kann die Klemmvorrichtung wiederholt lösbar an der Spannvorrichtung befestigbar sein. Ein Vorteil einer solchen Ausführungsform kann sein, dass die Klemmvorrichtung separat von der Spannvorrichtung handhabbar sein kann, etwa um die Klemmvorrichtung an der Druckfolie anzubringen oder die Druckfolie zusammen mit der Klemmvorrichtung von der Tragstruktur zu entfernen.

Gemäß einer weiteren Ausführungsform kann der Tragboden mehrere laterale Seiten aufweisen, wobei die Spannvorrichtung an und/oder angrenzend an einer der lateralen Seiten des Tragbodens angeordnet sein kann. Ein Vorteil einer solchen Ausführungsform kann sein, dass die Spannvorrichtung einfach erreichbar ist, etwa um die Spannvorrichtung zu betätigen oder um die Klemmvorrichtung an der Spannvorrichtung anzubringen. Gleichzeitig bleibt ausreichend Bauraum für das Druckbett zur Verfügung.

Gemäß einer weiteren Ausführungsform kann die an und/oder angrenzend an der einen der lateralen Seiten des Tragbodens angeordnete Spannvorrichtung entgegen einer in die Spannrichtung weisenden elastischen Spannkraft in Richtung einer anderen der lateralen Seiten des Tragbodens hin verschiebbar sein. Ein Vorteil einer solchen Ausführungsform kann sein, dass die Spannvorrichtung die Spannkraft zum Spannen der Druckfolie selbsttätig und folglich mit geringem Aufwand aufbringen kann.

Gemäß einer weiteren Ausführungsform kann die Tragstruktur eine unbeweglich an der Tragstruktur ausgebildete Montagevorrichtung aufweisen, insbesondere eine relativ zum Druckbett und/oder relativ zum Tragboden unbeweglich mit dem Tragboden verbundene Montagevorrichtung aufweisen, wobei die oder eine Klemmvorrichtung an der Montagevorrichtung und/oder über die Montagevorrichtung entlang einer Spannrichtung unbeweglich an der Tragstruktur befestigbar ist befestigbar oder befestigt sein kann. Ein Vorteil einer solchen Ausführungsform kann sein, dass die Druckfolie mit einer einfach und daher kostengünstig ausgestalteten Montagevorrichtung an der Tragstruktur anbringbar ist. Der konstruktive Aufwand kann auf diese Weise gering gehalten werden.

Die Montagevorrichtung kann eine durch die unbewegliche Verbindung mit dem Tragboden ein Festlager bilden oder Bestandteil einer Festlageranordnung sein.

Gemäß einer weiteren Ausführungsform kann die Klemmvorrichtung wiederholt lösbar an der Montagevorrichtung befestigbar ist. Ein Vorteil einer solchen Ausführungsform kann sein, dass die Klemmvorrichtung separat von der Montagevorrichtung handhabbar sein kann, etwa um die Klemmvorrichtung an der Druckfolie anzubringen oder die Druckfolie zusammen mit der Klemmvorrichtung oder den Klemmvorrichtungen von der Tragstruktur zu entfernen.

Gemäß einer weiteren Ausführungsform kann der Tragboden mehrere laterale Seiten aufweisen, wobei die Montagevorrichtung an und/oder angrenzend an einer der lateralen Seiten des Tragbodens angeordnet ist. Ein Vorteil einer solchen Ausführungsform kann sein, dass die Montagevorrichtung einfach erreichbar ist, etwa um die Klemmvorrichtung an der Montagevorrichtung anzubringen. Gleichzeitig bleibt auf diese Weise ausreichend Bauraum für das Druckbett zur Verfügung.

Gemäß einer weiteren Ausführungsform kann die Tragstruktur eine Spannvorrichtung zum Spannen der Druckfolie und/oder eine unbeweglich angeordnete Montagevorrichtung, insbesondere eine relativ zum Druckbett und/oder relativ zum Tragboden unbeweglich mit dem Tragboden verbundene Montagevorrichtung aufweisen. Dabei kann die Spannvorrichtung bevorzugt relativ zum Druckbett und/oder relativ zum Tragboden bewegbar mit dem Tragboden verbunden sein. Weiter bevorzugt kann die zumindest eine Klemmvorrichtung bewegungsübertragend mit der Spannvorrichtung oder, insbesondere fixiert, mit der Montagevorrichtung verbindbar sein. Ein Vorteil einer solchen Ausführungsform kann sein, dass mehrere Klemmvorrichtungen einfach an der Tragstruktur anbringbar sind und eine ausreichende Bewegungsfunktionalität bereitgestellt wird.

Weiter bevorzugt kann die oder eine Klemmvorrichtung mit der Spannvorrichtung, insbesondere bewegungsübertragend mit der Spannvorrichtung, und die jeweils andere oder eine andere der Klemmvorrichtungen mit der Montagevorrichtung, insbesondere unbeweglich mit der Montagevorrichtung an der Tragstruktur verbindbar oder verbunden sein. Je nach Anordnung kann eine der Klemmvorrichtungen damit in der Position relativ zur Tragstruktur fixiert und eine andere der Klemmvorrichtungen in der Position relativ zur Tragstruktur beweglich an der Tragstruktur angeordnet sein. Es kann sich hierdurch eine relative Beweglichkeit der Klemmvorrichtungen zueinander ergeben, wodurch sich eine besonders vorteilhafte Spannbarkeit der Druckfolie zwischen den Klemmvorrichtungen realisieren lässt.

Gemäß einer weiteren Ausführungsform kann der Tragboden mehrere laterale Seiten aufweisen, wobei die Spannvorrichtung an oder angrenzend an einer der lateralen Seiten des Tragbodens angeordnet sein kann und die Montagevorrichtung an oder angrenzend einer anderen der lateralen Seiten des Tragbodens angeordnet sein kann. Bevorzugt kann der Tragboden zwischen der Spannvorrichtung und der Montagevorrichtung verlaufen. Ein Vorteil einer solchen Ausführungsform kann sein, dass die Spannvorrichtung und die Montagevorrichtung einfach erreichbar sein können und zwischen der Spannvorrichtung und der Montagevorrichtung ausreichend Bauraum für das Druckbett und die Ablage der Druckfolie verbleibt.

Gemäß einer weiteren Ausführungsform können die eine der lateralen Seiten des Tragbodens und die andere der lateralen Seiten des Tragbodens einander gegenüberliegend angeordnete laterale Seiten des Tragbodens sein. Ein Vorteil einer solchen Ausführungsform kann sein, dass die Druckfolie, beispielswiese mit wenigstens zwei Klemmvorrichtungen, von einander gegenüberliegenden Seiten gehalten und optional auch gespannt werden kann, was eine kostengünstige, jedoch genaue Positionierung der Druckfolie ermöglicht.

Gemäß einer weiteren Ausführungsform kann das Druckbett zwischen der Spannvorrichtung und der Montagevorrichtung und/oder zwischen den lateralen Seiten des Tragbodens angeordnet sein und/oder verlaufen. Ein Vorteil einer solchen Ausführungsform kann sein, dass die Druckfolie einfach auf dem Druckbett ablegbar ist, selbst wenn diese von wenigstens zwei Klemmvorrichtungen gehalten ist.

Gemäß einer weiteren Ausführungsform kann eine der wenigstens zwei Klemmvorrichtungen an der Spannvorrichtung bewegungsübertragend befestigbar sein und eine andere der wenigstens zwei Klemmvorrichtungen an der Montagevorrichtung relativ zum Druckbett unverschiebbar befestigbar sein. Insbesondere kann jede der wenigstens zwei Klemmvorrichtungen ausgestaltet sein, um wahlweise sowohl an der Spannvorrichtung als auch an der Montagevorrichtung befestigbar zu sein. Ein Vorteil einer solchen Ausführungsform kann sein, dass die Klemmvorrichtungen einfacher montierbar beziehungsweise befestigbar sind und eine grö-ßere Flexibilität in der Wahl der Montagepositionen für die jeweiligen Klemmvorrichtungen vorhanden ist.

Gemäß einer weiteren Ausführungsform können die eine der wenigstens zwei Klemmvorrichtungen an der Spannvorrichtung und eine andere der wenigstens zwei Klemmvorrichtungen an der Montagevorrichtung wiederholt lösbar befestigbar sein. Ein Vorteil einer solchen Ausführungsform kann sein, dass die Klemmvorrichtungen separat von der Tragstruktur gehandhabt werden können, etwa um die Druckfolie kraftschlüssig an den Klemmvorrichtungen zu befestigen beziehungsweise zu verklemmen.

Gemäß einer weiteren Ausführungsform kann der Tragboden eine in einer Betriebsstellung des Werkstückträgers entgegen die Schwerkraftrichtung weisende erste Seite und eine der ersten Seite gegenüberliegende zweite Seite aufweisen, wobei die Spannvorrichtung zumindest abschnittsweise an der zweiten Seite angeordnet sein oder verlaufen kann . Ein Vorteil einer solchen Ausführungsform kann sein, dass die Druckfolie und/oder die Klemmvorrichtungen einfach handhabbar und mit dem Tragboden verbindbar sein können, ohne dass diese mit der Spannvorrichtung kollidieren. Ebenso können geometrische Restriktionen vermieden werden, die einer Beweglichkeit der Spannvorrichtung relativ zur Tragstruktur und/oder relativ zum Druckbett entgegenstehen würden.

Gemäß einer weiteren Ausführungsform kann das Druckbett auf der ersten Seite des Tragbodens anordnenbar oder angeordnet sein. Ein Vorteil einer solchen Ausführungsform kann sein, dass das Druckbett einfach erreichbar und/oder handhabbar und mit dem Tragboden verbindbar sein kann, ohne mit der Spannvorrichtung zu kollidieren. Das Druckbett kann mit dem Tragboden zumindest abschnittsweise eine stufenlose Fläche bilden und/oder miteinander fluchtend ausgebildet sein. Insbesondere kann eine Oberseite des Druckbetts mit einer Oberseite des Tragbodens zumindest abschnittsweise fluchtend ausgebildet sein.

Gemäß einer weiteren Ausführungsform kann der Tragboden ein Lager zum Führen der Bewegung der Spannvorrichtung aufweisen oder mit einem solchen Lager ausgestattet sein. Das Lager kann mithin unmittelbar an dem Tragboden ausgebildet sein oder durch eine separat ausgebildet und an dem Tragboden befestigte Lagerkomponente gebildet sein. Ein Vorteil einer solchen Ausführungsform kann sein, dass eine präzise Führung der Bewegung der Spannvorrichtung mit geringem konstruktiven Aufwand und wenig Platzaufwand ermöglicht wird.

Die Spannvorrichtung zusammen mit einem solchen Lager zum Führen der Bewegung der Spannvorrichtung können eine Loslageranordnung bilden. Dabei kann das Lager ein Gleitlager sein und/oder die Spannvorrichtung kann als Blechschieber, insbesondere gefederter Blechschieber ausgebildet sein. Das Lager kann insbesondere eine Gleitlagerscheibe aufweisen und/oder ein Bundlager aufweisen. Insbesondere kann das Lager als kombiniertes Gleit- und Bundlager ausgebildet sein.

Gemäß einer weiteren Ausführungsform kann das Lager zumindest abschnittsweise in die zweite Seite des Tragbodens eingelassen sein. Ein Vorteil einer solchen Ausführungsform kann sein, dass eine präzise Führung der Bewegung der Spannvorrichtung mit geringem konstruktiven Aufwand und Vermeidung von geometrischen Restriktionen der Beweglichkeit der Spannvorrichtung relativ zum Druckbett ermöglicht wird.

Gemäß einer weiteren Ausführungsform kann das Lager und die Spannvorrichtung zumindest abschnittsweise komplementär zueinander ausgeformt sein. Ein Vorteil einer solchen Ausführungsform kann sein, dass eine präzise Führung der Bewegung der Spannvorrichtung mit geringen Kosten und wenig Platzaufwand ermöglicht wird.

Gemäß einer weiteren Ausführungsform kann die Spannvorrichtung eine Führungsaufnahme aufweisen und das Lager kann einen Führungsvorsprung aufweisen. Der Führungsvorsprung kann in die Führungsaufnahme eingreifen. Ein Vorteil einer solchen Ausführungsform kann sein, dass die Bewegung der Spannvorrichtung mit geringen Kosten und wenig Platzaufwand bei gleichzeitig hoher Genauigkeit geführt werden kann.

Gemäß einer weiteren Ausführungsform kann die Führungsaufnahme entlang der Spannrichtung eine größere Ausdehnung aufweisen als der Führungsvorsprung. Ein Vorteil einer solchen Ausführungsform kann sein, dass die Führungsaufnahme und der Führungsvorsprung die Bewegung der Spannvorrichtung in und/oder entgegen der Spannrichtung ermöglichen.

Gemäß einer weiteren Ausführungsform kann die Differenz der Ausdehnung der Führungsaufnahme und der Ausdehnung des Führungsvorsprungs die maximale Verschiebbarkeit der Spannvorrichtung relativ zum Druckbett und/oder zum Tragboden in und/oder entgegen der Spannrichtung vorgeben. Ein Vorteil einer solchen Ausführungsform kann sein, dass kein separater Anschlag zur Begrenzung der Verschiebbarkeit der Spannvorrichtung in und/oder entgegen der Spannrichtung benötigt wird und gleichzeitig eine genau definierte Relativbeweglichkeit sichergestellt wird.

Gemäß einer weiteren Ausführungsform kann die Spannvorrichtung eine entgegen der Spannrichtung vorspringende Führungszunge aufweisen, wobei die Führungszunge mit der Führungsaufnahme versehen ist. Ferner kann die Führungszunge in eine Aufnahmestruktur des Tragbodens eingreifen. Ein Vorteil einer solchen Ausführungsform kann sein, dass platzsparend genügend Platz für die Führungsaufnahme bereitgestellt ist und eine genaue Führung der Bewegung der Spannvorrichtung gewährleistet wird.

Gemäß einer weiteren Ausführungsform kann der Tragboden mehrere Führungsvorsprünge aufweisen, wobei zumindest zwischen zwei der Führungsvorsprünge zumindest eine die elastische Spannkraft aufbringende Federvorrichtung angeordnet sein kann. Ein Vorteil einer solchen Ausführungsform kann sein, dass die Federvorrichtung und die Führungsvorsprünge platzsparend angeordnet sind.

Gemäß einer weiteren Ausführungsform kann die Spannvorrichtung mehrere entgegen der Spannrichtung vorspringende Führungszungen aufweisen, wobei die Führungszungen jeweils mit einer der Führungsaufnahme versehen sind und/oder jeweils in eine Aufnahmestruktur des Tragbodens eingreifen. Ein Vorteil einer solchen Ausführungsform kann sein, dass die Führungsgenauigkeit platzsparend verbessert ist.

Gemäß einer weiteren Ausführungsform kann die Tragstruktur und/oder der Tragboden mindestens eine Federvorrichtungsaufnahme zur Aufnahme der Federvorrichtung aufweisen, wobei die Federvorrichtungsaufnahme bevorzugt zwischen zwei der Führungszungen angeordnet sein kann. Ein Vorteil einer solchen Ausführungsform kann sein, dass die Federvorrichtung platzsparend angeordnet werden kann und eine sichere Federfunktionalität bereitstellen kann.

Gemäß einer weiteren Ausführungsform kann die Tragstruktur eine Spannvorrichtungsabdeckungsplatte aufweisen. Der Führungsvorsprung kann ein Befestigungselement für ein die Spannvorrichtungsabdeckungsplatte am Tragboden befestigendes Gegenbefestigungselement aufweisen. Beispielsweise kann das Befestigungselement ein mit einem Außengewinde versehener Gewindestift oder eine mit einem Innengewinde versehene Gewindeöffnung sein. Ein Vorteil einer solchen Ausführungsform kann sein, dass die Spannvorrichtungsabdeckungsplatte platzsparend und mit hoher Befestigungssicherheit anbringbar ist. Die Spannvorrichtungsabdeckungsplatte kann die Spannvorrichtung zumindest teilweise abdecken, um Behinderungen der Bewegung der Spannvorrichtung durch externe Teile zu verhindern und/oder um ein ungewolltes Bewegen der Spannvorrichtung weg von dem Tragboden zu verhindern.

Eine solche Spannvorrichtungsabdeckungsplatte kann ferner zumindest abschnittsweise eine Führungsfunktionalität beziehungsweise Führungsflächen für die Spannvorrichtung aufweisen und/oder bereitstellen.

Gemäß einer weiteren Ausführungsform kann das Lager mehrere Führungsvorsprünge aufweisen, von denen wenigstens zwei entlang der Spannrichtung hintereinander angeordnet sein können. Ein Vorteil einer solchen Ausführungsform kann sein, dass zwei entlang der Spannrichtung hintereinander angeordnete Führungsvorsprünge ein lineares Schieben der Spannvorrichtung entlang der Spannrichtung noch besser führen können, als lediglich ein Führungsvorsprung. Unerwünschte Rotationslagen der Spannvorrichtungen lassen sich hierdurch sicher vermeiden.

Gemäß einer weiteren Ausführungsform kann die die Führungsvorsprünge aufnehmende Führungsaufnahme entlang der Spannrichtung eine Ausdehnung aufweisen, die größer ist als der Abstand voneinander weg weisender Seiten der entlang der Spannrichtung hintereinander angeordneten Führungsvorsprünge. Ein Vorteil einer solchen Ausführungsform kann sein, dass die Führungsvorsprünge und die Führungsaufnahme die Bewegbarkeit der Spannvorrichtung entlang der Spannrichtung ermöglichen.

Gemäß einer weiteren Ausführungsform kann die Differenz der Ausdehnung der Führungsaufnahme und des Abstands der voneinander weg weisenden Seiten die maximale Verschiebbarkeit der Spannvorrichtung in und/oder entgegen der Spannrichtung vorgeben. Ein Vorteil einer solchen Ausführungsform kann sein, dass die maximale Verschiebbarkeit der Spannvorrichtung ohne einen zusätzlichen Anschlag vorgebbar ist.

Gemäß einer weiteren Ausführungsform kann die Spannvorrichtung und/oder die Montagevorrichtung jeweils eine Montiereinrichtung oder jeweils mehrere Montiereinrichtung aufweisen. Eine solche Montiereinrichtungen kann beispielsweise eine Montageaufnahme aufweisen.

In bevorzugter Weise kann die maximale Verschiebbarkeit der Spannvorrichtung in Spannrichtung größer sein, als die Summe der Ausdehnung wenigstens eines Abschnitts einer der Montageaufnahmen der Spannvorrichtung entlang der Spannrichtung und der Ausdehnung wenigstens eines Abschnitts einer der Montageaufnahmen der Montagevorrichtung entlang der Spannrichtung . Ein Vorteil einer solchen Ausführungsform kann sein, dass die Montageaufnahmen eine einfache und sichere Befestigung der Klemmvorrichtung an der Spannvorrichtung gewährleisten, nämlich in eingeschobener Stellung der Spannvorrichtung und bei vorgegebener Dimensionierung der Druckfolie.

Gleichzeitig kann bei vorgegebener Dimensionierung einer in die jeweiligen Klemmvorrichtungen eingeklemmten Druckfolie die Summe der Ausdehnung wenigstens eines Abschnitts einer der Montageaufnahmen der Spannvorrichtung entlang der Spannrichtung und der Ausdehnung wenigstens eines Abschnitts einer der Montageaufnahmen der Montagevorrichtung entlang der Spannrichtung die maximale Beweglichkeit der Spannvorrichtung aus einer eingeschobenen Stellung heraus in eine Spannrichtung beschränken. Bei Erreichen einer durch die Montageaufnahmen vorgegebenen Bewegungsendlage der Spannvorrichtung kann die Druckfolie unter Spannung gehalten werden, sofern die Spannvorrichtung ohne eingespannte Druckfolie weiter in Spannrichtung bewegbar ist.

Gemäß einer weiteren Ausführungsform können wenigstens ausgewählte der Montageaufnahmen zumindest abschnittsweise als Langlöcher ausgebildet sein, wobei eine Längsachse der Langlöcher im Wesentlichen entlang der Spannrichtung verlaufend ausgerichtet ist. Ein Vorteil einer solchen Ausführungsform kann sein, dass Langlöcher ein genaues Anbringen und Fixieren der Klemmvorrichtung vereinfachen.

Gemäß einer weiteren Ausführungsform können wenigstens ausgewählte der Montageaufnahmen schlüssellochförmig, ausgebildet sein. Schlüssellochförmige Aufnahmen können einen Langlochabschnitt und einen an einem Längsende des Langlochabschnitts angeordneten kreisförmigen Abschnitt aufweisen. Das Längsende kann beispielswiese vom Tragboden weg weisenden. Quer zur Längsrichtung des Langlochabschnitts kann der kreisförmigen Abschnitt eine größere Ausdehnung haben als der Langlochabschnitt. Ein Vorteil einer solchen Ausführungsform kann sein, dass Schlüssellöcher ein genaues Anbringen und Fixieren der Klemmvorrichtung weiter vereinfachen und im gespannten Zustand der Druckfolie eine fixierte Stellung der Klemmvorrichtung sicher aufrecht erhalten werden kann.

Gemäß einer weiteren Ausführungsform kann die Tragstruktur und zum Beispiel das Druckbett einen vordefinierten Punkt aufweisen. Die Spannvorrichtung sowie die Montagevorrichtung können rotationssymmetrisch oder im Wesentlichen rotationssymmetrisch zu dem vordefinierten Punkt angeordnet sein, insbesondere wenn die Spannvorrichtung in einer teilweise eingeschobenen Spannposition angeordnet ist. Die teilweise eingeschobene Spannposition kann zwischen einer vollständig oder maximal ausgeschobenen Position, in der die Spannvorrichtung entlang der Spannrichtung schiebbar ist, und einer vollständig oder maximal eingeschobenen Position, in der die Spannvorrichtung entgegen der Spannrichtung schiebbar ist, liegen. Ein Vorteil einer solchen Ausführungsform kann sein, dass der Werkstückträger in mehreren Orientierungen ohne weitere Anpassungen zur Herstellung von dreidimensionalen Siebdruckwerkstücken eingesetzt werden kann. Zudem kann hierdurch die Nutzbarkeit von Klemmvorrichtungen sowohl an der Spannvorrichtung als auch an der Montagevorrichtung begünstigt sowie auch eine besonders gleichmäßige Folienspannung sichergestellt werden kann.

Gemäß einer weiteren Ausführungsform kann die Spannvorrichtung bezogen auf eine durch den vordefinierten Punkt verlaufende Achse spiegelsymmetrisch ausgestaltet sein. Ein Vorteil einer solchen Ausführungsform kann sein, dass eine spiegelsymmetrisch ausgebildete Spannvorrichtung bei Bewegungen in und/oder entgegen der Spannrichtung weniger schnell verkantet.

Gemäß einer weiteren Ausführungsform kann der vordefinierten Punkt der Mittelpunkt des Druckbetts oder durch den Mittelpunkt des Druckbetts gebildet sein. Ein Vorteil einer solchen Ausführungsform kann sein, dass die Ausrichtung der Druckfolie hierdurch vereinfacht wird.

Gemäß einer weiteren Ausführungsform können die Montagevorrichtung und/oder die Spannvorrichtung eine Montiereinrichtung und die oder die zumindest eine Klemmvorrichtung eine Gegenmontiereinrichtung zur Befestigung der Klemmvorrichtung an der Montagevorrichtung aufweisen. Ein Vorteil einer solchen Ausführungsform kann sein, dass die Klemmvorrichtung besonders einfach und mit geringem Handhabungsaufwand anbringbar ist.

Gemäß einer weiteren Ausführungsform kann die Gegenmontiereinrichtung zumindest abschnittsweise stiftförmig ausgestaltet sein. Die stiftförmige Gegenmontiereinrichtung kann in ihrem Verlauf bevorzugt einen die Stiftform zumindest teilweise umlaufenden und von der Stiftform weg vorspringenden, insbesondere radial vorspringenden, Montierflansch aufweisen. Die Gegenmontiereinrichtung kann insbesondere pilzförmig ausgebildet sein. Ein Vorteil einer solchen Ausführungsform kann sein, dass der Montierflansch ein Verkippen der Klemmvorrichtung auch dann verhindern kann, wenn entlang und/oder entgegen der Spannrichtung Zugkräfte auf die Klemmvorrichtung wirken, insbesondere wenn die Montiereinrichtung und/oder die Spanneinrichtung eine Montageaufnahme aufweist, in die die Gegenmontiereinrichtung einsetzbar oder eingesetzt ist, wobei der Montierflansch einen Rand der Montageaufnahme untergreifen kann.

Ist die Montageaufnahme schlüssellochförmig, so kann der Montageflansch so bemessen sein, dass dieser durch den runden Abschnitt führbar ist. Ein von dem Montierflansch zumindest teilweise umlaufener Stiftabschnitt kann einen Durchmesser aufweisen, der kleiner als die quer zur Längsrichtung des Langlochabschnitts verlaufende Breite des Langlochabschnitts der Montageaufnahme ist. Gleichzeitig kann der Montierflansch einen größeren Durchmesser aufweisen als die Breite des Langlochabschnitts, sodass bei einer Positionierung der Gegenmontiereinrichtung innerhalb des Langlochabschnitts der Montageaufnahme eine formschlüssige Verbindung zwischen der Montageaufnahme und der Gegenmontiereinrichtung in Längsrichtung der Gegenmontiereinrichtung entsteht.

Gemäß einer weiteren Ausführungsform kann die Klemmvorrichtung eine Montierplatte zum Montieren der Klemmvorrichtung an der Tragstruktur, und eine um eine Schwenkachse relativ zur Montierplatte schwenkbare Klemmplatte aufweisen. Ein Vorteil einer solchen Ausführungsform kann sein, dass die Klemmvorrichtung mit wenigen Teilen fertigbar ist und gleichzeitig eine sichere Klemmfunktionalität bereitstellen kann.

Gemäß einer weiteren Ausführungsform kann an der Montierplatte die Gegenmontiereinrichtung befestigt sein. Ein Vorteil einer solchen Ausführungsform kann sein, dass die Klemmvorrichtung einfach an der Tragstruktur anbringbar ist.

Gemäß einer weiteren Ausführungsform können die Montierplatte und die Klemmplatte einander gegenüberliegende Klemmflächen aufweisen. Im Betrieb der Klemmvorrichtung kann die Druckfolie zwischen den Klemmflächen verklemmt oder verpresst und hierdurch kraftschlüssig gehalten sein. An einer der Klemmflächen kann bevorzugt ein elastisches Klemmelement angebracht sein. Ein Vorteil einer solchen Ausführungsform kann sein, dass die Druckfolie einfach an der Klemmvorrichtung befestigbar und auch wieder davon lösbar ist, wobei in Klemmstellung eine ausreichend hohe Befestigungssicherheit erzielt werden kann.

Gemäß einer weiteren Ausführungsform kann das elastische Klemmelement zumindest abschnittsweise in einer Vertiefung angeordnet sein, die in der einen der Klemmflächen, an der das Klemmelement befestigt ist, vorgesehenen ist. Ein Vorteil einer solchen Ausführungsform kann sein, dass das Klemmelement sicher an der Montierplatte oder der Klemmplatte gehalten ist und damit im Betrieb die Klemmsicherheit erhöht.

Gemäß einer weiteren Ausführungsform kann die Klemmvorrichtung eine federelastische Verbindungsplatte aufweisen. Die federelastische Verbindungsplatte kann die Montierplatte und die Klemmplatte unverschiebbar miteinander verbinden und/oder federelastisch zueinander in einer Klemmstellung halten oder drücken. Ein Vorteil einer solchen Ausführungsform kann sein, dass die Klemmvorrichtung eine die Druckfolie haltende Klemm- oder Presskraft selbsttätig aufbringen kann, sodass keine zusätzlichen Elemente und beispielswiese Aktoren für die Bereitstellung und/oder Aufrechterhaltung der Klemm- oder Presskraft benötigt werden.

Gemäß einer weiteren Ausführungsform kann die Verbindungsplatte eine Blattfeder, einer Federlasche oder eine Federzunge sein. Die Verbindungsplatte kann aus Federstahlt gefertigt sein oder sogar daraus bestehen. Ein Vorteil einer solchen Ausführungsform kann sein, dass die Verbindungsplatte verschließarm und daher langlebig und/oder wartungsarm oder sogar wartungsfrei betreibbar ist.

Gemäß einer weiteren Ausführungsform kann die Verbindungsplatte zwei quer zur Schwenkachse voneinander beabstandete Befestigungsbereiche aufweisen, wobei einer der Befestigungsbereiche an der Montierplatte und der andere der Befestigungsbereiche an der Klemmplatte befestigt ist und/oder wobei die Befestigungsbereiche jeweils beabstandet von der Schwenkachse angeordnet sind und/oder in einer Spannrichtung gesehen beidseitig der Schwenkachse angeordnet sind. Ein Vorteil einer solchen Ausführungsform kann sein, dass die Verbindungsplatte beim Öffnen der Klemmvorrichtung, also wenn die Klemmflächen voneinander weg bewegt werden, gleichmäßig verformt wird, sodass eine kleinvolumige oder gar punktuelle Überlastung der Verbindungsplatte vermieden wird.

Gemäß einer weiteren Ausführungsform kann der eine der Befestigungsbereiche zwischen dem anderen der Befestigungsbereiche und den Klemmflächen angeordnet sein. Ein Vorteil einer solchen Ausführungsform kann sein, dass das Öffnen der Klemmvorrichtung erleichtert wird. Ferner kann die Schwenkachse zwischen den beiden Befestigungsbereichen verlaufen.

Gemäß einer weiteren Ausführungsform kann die Klemmfläche der Klemmplatte quer zur Schwenkachse an ein Ende der Klemmplatte angrenzen und der andere der Befestigungsbereiche kann an ein dem einen Ende der Klemmplatte gegenüberliegenden anderen Ende der Klemmplatte angrenzen. Ein Vorteil einer solchen Ausführungsform kann sein, dass die Verbindungsplatte ein einlegen der Druckfolie zwischen die Klemmflächen nicht behindert.

Gemäß einer weiteren Ausführungsform kann sich das Klemmelement entlang der einer Richtung der Schwenkachse vollständig und/oder parallel zur Schwenkachse zumindest abschnittsweise oder entlang der Klemmplatte und/oder entlang der Montierplatte erstrecken. Ein Vorteil einer solchen Ausführungsform kann sein, dass das Klemmelement die Druckfolie nicht punktuell, sondern im Wesentlichen linienförmig verklemmen oder verpressen kann, wodurch eine punktuelle Überlastung der mit der Spannkraft gespannten Druckfolie verhindert wird.

Gemäß einer weiteren Ausführungsform kann in einem Klemmzustand der Klemmvorrichtung, in dem das Klemmelement an der gegenüberliegenden Klemmfläche anliegt oder die Druckfolie gegen die gegenüberliegende Klemmfläche drückt, das Klemmelement entlang der Schwenkachse verlaufend zumindest abschnittsweise oder durchgängig an der gegenüberliegenden Klemmfläche oder der Druckfolie anliegen. Ein Vorteil einer solchen Ausführungsform kann sein, dass das Klemmelement die Druckfolie nicht punktuell, sondern im Wesentlichen entlang einer Linie flächig und durchgehend linienförmig verklemmen oder verpressen kann, wodurch eine punktuelle Überlastung der mit der Spannkraft gespannten Druckfolie verhindert wird.

Gemäß einer weiteren Ausführungsform kann die Klemmvorrichtung zumindest eine Halteaufnahme zum Halten und/oder Handhaben durch eine externe Handhabungsvorrichtung aufweisen und/oder zwei entlang einer Richtung der Schwenkachse oder entlang einer Richtung parallel zur Schwenkachse voneinander beanstandete Halteaufnahmen zum Halten und/oder Handhaben durch eine externe Handhabungsvorrichtung aufweisen. Entlang einer Richtung der Schwenkachse oder entlang einer Richtung parallel zur Schwenkachse voneinander weg weisende Enden der Halteaufnahmen können quer zur Schwenkachse verlaufende lichte Weiten aufweisen, die größer sind, als quer zur Schwenkachse verlaufende lichte Weiten zweier aufeinander zu weisender Enden der Halteaufnahmen. Die Halteaufnahmen können beispielsweise schlüssellochförmig ausgestaltet sein. Ein Vorteil einer solchen Ausführungsform kann sein, dass Klemmvorrichtungen einfach mit geeigneten Werkzeugen, etwa pilzförmige Greifer, gegriffen, bewegt und gehalten werden kann.

Gemäß einer weiteren Ausführungsform können die Halteaufnahmen (Y) schlüssellochförmig ausgebildet sein.

Gemäß einer weiteren Ausführungsform kann die Klemmplatte die Halteaufnahmen aufweisen. Ein Vorteil einer solchen Ausführungsform kann sein, dass mit dem Werkzeug die Klemmplatte bewegt werden kann, auch wenn die Klemmvorrichtung an der Tragkonstruktion angebracht ist, etwa um die Klemmvorrichtung zu öffnen und/oder zu schließen.

Gemäß einer weiteren Ausführungsform kann das Druckbett zumindest eine der Klemmflächen quer zur Schwenkachse und/oder in einer Dickenrichtung des Druckbetts oder in einer Dickenrichtung der Tragstruktur überragen. Das Druckbett kann mit der Klemmvorrichtung oder den Klemmvorrichtungen an eine gemeinsame Ebene angrenzen oder die Klemmflächen überragen.

Die Druckfolie kann über einen die Klemmfläche überragenden Rand des Druckbetts oder des Tragbodens gespannt sein. Der Rand kann verrundet sein und beispielsweise einen Radius von 1 mm, 2 mm, bis zu 5 mm, bis zu 10 mm oder sogar mehr als 10 mm aufweisen. Der Rand kann das Druckbett umgeben und/oder Bestandteil des Tragbodens sein. Ein Vorteil einer solchen Ausführungsform kann sein, dass die mit der Klemmvorrichtung und der Spannkraft gespannte Druckfolie sicher auf und nicht beabstandet von dem Druckbett gespannt ist.

Ein weiterer Aspekt der vorliegenden Erfindung betrifft eine Tragstruktur. Eine erfindungsgemäße Tragstruktur ist insbesondere ausgebildet als eine Tragstruktur für einen Werkstückträger für die Herstellung dreidimensionaler Siebdruckwerkstücke, insbesondere für einen Werkstückträger gemäß dem weiteren Aspekt der Erfindung. Die erfindungsgemäße Tragstruktur weist ein Druckbett zur Ablage einer Druckfolie und eine Spannvorrichtung sowie eine Montagevorrichtung auf, wobei die Spannvorrichtung und die Montagevorrichtung an unterschiedlichen und vorzugsweise einander gegenüberliegenden Seiten des Druckbetts angeordnet sind und wobei die Spannvorrichtung und die Montagevorrichtung Montiereinrichtungen aufweisen können, mit denen unterschiedliche Seiten beziehungsweise gegenüberliegende Enden einer Druckfolie in Wirkverbindung bringbar sind, wobei die Spannvorrichtung bevorzugt in einer Richtung entgegen einer in eine Spannrichtung weisenden elastischen Spannkraft auf das Druckbett hin verschiebbar ist. Eine in einer solchen Tragstruktur einzuspannende und/oder einzuklemmende Druckfolie kann insbesondere eine mit dreidimensionalen Siebdruckwerkstücken bedruckbare Druckfläche aufweisen.

Gemäß einer weiteren Ausführungsform der Tragstruktur weist die Tragstruktur einen Tragboden auf, an dem die Spannvorrichtung angeordnet ist und/oder auf dem das Druckbett angeordnet oder anordenbar ist.

Gemäß einer weiteren Ausführungsform der Tragstruktur weist der Tragboden eine erste Seite, auf der das Druckbett angeordnet oder anordenbar ist, und eine der ersten Seite abgewandten zweite Seite auf, wobei die Spannvorrichtung zumindest abschnittsweise an der zweiten Seite angeordnet ist und/oder entlang der zweiten Seite verläuft.

Gemäß einer weiteren Ausführungsform der Tragstruktur weist der Tragboden ein Lager zum Führen der Bewegung der Spannvorrichtung auf.

Gemäß einer weiteren Ausführungsform der Tragstruktur ist das Lager zumindest abschnittsweise in die zweite Seite des Tragbodens eingelassen.

Gemäß einer weiteren Ausführungsform der Tragstruktur sind das Lager und die Spannvorrichtung zumindest abschnittsweise komplementär zueinander ausgeformt.

Gemäß einer weiteren Ausführungsform der Tragstruktur weist die Spannvorrichtung eine Führungsaufnahme auf und das Lager weist einen Führungsvorsprung auf, wobei der Führungsvorsprung in die Führungsaufnahme eingreift.

Gemäß einer weiteren Ausführungsform der Tragstruktur weist die Führungsaufnahme entlang der Spannrichtung eine größere Ausdehnung auf als der Führungsvorsprung.

Gemäß einer weiteren Ausführungsform der Tragstruktur gibt die Differenz der Ausdehnung der Führungsaufnahme und der Ausdehnung des Führungsvorsprungs die maximale Verschiebbarkeit der Spannvorrichtung in und/oder entgegen der Spannrichtung vor.

Gemäß einer weiteren Ausführungsform der Tragstruktur weist die Spannvorrichtung eine entgegen der Spannrichtung vorspringende Führungszunge auf, wobei die Führungszunge mit der Führungsaufnahme versehen ist und/oder wobei die Führungszunge in eine Aufnahmestruktur des Tragbodens eingreift.

Gemäß einer weiteren Ausführungsform der Tragstruktur weist die Spannvorrichtung mehrere Führungsaufnahmen auf, wobei zumindest zwischen zwei der Führungsaufnahmen zumindest eine die elastische Spannkraft aufbringende Federvorrichtung angeordnet ist.

Gemäß einer weiteren Ausführungsform der Tragstruktur weist die Spannvorrichtung mehrere entgegen der Spannrichtung vorspringende Führungszungen auf, wobei die Führungszungen jeweils mit mindestens einer der Führungsaufnahmen versehen sind und/oder jeweils in eine Aufnahmestruktur des Tragbodens eingreifen.

Gemäß einer weiteren Ausführungsform der Tragstruktur weist der Tragboden mindestens eine Federvorrichtungsaufnahme auf, wobei die Federvorrichtungsaufnahme bevorzugt zwischen zwei der Führungszungen angeordnet ist.

Gemäß einer weiteren Ausführungsform der Tragstruktur weist die Tragstruktur eine Spannvorrichtungsabdeckungsplatte auf, wobei bevorzugt der Führungsvorsprung ein Befestigungselement für ein die Spannvorrichtungsabdeckungsplatte am Tragboden befestigendes Gegenbefestigungselement aufweist.

Gemäß einer weiteren Ausführungsform der Tragstruktur weist das Lager mehrere Führungsvorsprünge aufweist, von denen wenigstens zwei entlang der Spannrichtung hintereinander angeordnet sind.

Gemäß einer weiteren Ausführungsform der Tragstruktur weist eine die Führungsvorsprünge aufnehmende Führungsaufnahme entlang der Spannrichtung eine Ausdehnung aufweist, die größer ist als der Abstand voneinander weg weisender Seiten der entlang der Spannrichtung hintereinander angeordneten Führungsvorsprünge.

Gemäß einer weiteren Ausführungsform der Tragstruktur gibt die Differenz der Ausdehnung der Führungsaufnahme und des Abstands der voneinander weg weisenden Seiten die maximale Verschiebbarkeit der Spannvorrichtung (5) in und/oder entgegen der Spannrichtung vor.

Gemäß einer weiteren Ausführungsform der Tragstruktur weisem die Montiereinrichtungen Montageaufnahmen auf, wobei bevorzugt die maximale Verschiebbarkeit der Spannvorrichtung größer ist, als die Summe der Ausdehnung wenigstens eines Abschnitts einer der Montageaufnahmen der Spannvorrichtung entlang der Spannrichtung und der Ausdehnung wenigstens eines Abschnitts einer der Montageaufnahmen der Montagevorrichtung entlang der Spannrichtung.

Gemäß einer weiteren Ausführungsform der Tragstruktur sind wenigstens ausgewählte der Montageaufnahmen zumindest abschnittsweise als Langlöcher ausgebildet, wobei eine Längsachse der Langlöcher im Wesentlichen entlang der Spannrichtung verlaufend ausgerichtet ist.

Gemäß einer weiteren Ausführungsform der Tragstruktur sind wenigstens ausgewählte der Montageaufnahmen schlüssellochförmig ausgebildet, wobei die schlüssellochförmigen Montageaufnahmen einen Langlochabschnitt und einen an einem vom Tragboden weg weisenden Längsende des Langlochabschnitts angeordneten kreisförmigen Abschnitt aufweisen.

Gemäß einer weiteren Ausführungsform der Tragstruktur kann das Druckbett einen vordefinierten Punkt aufweisen und die in einer teilweise eingeschobenen Spannposition angeordnete Spannvorrichtung sowie die Montagevorrichtung können im Wesentlichen rotationssymmetrisch zu dem vordefinierten Punkt angeordnet sein, zumindest wenn die Spannvorrichtung in einer teilweise eingeschobenen Spannposition angeordnet ist.

Gemäß einer weiteren Ausführungsform der Tragstruktur kann die Spannvorrichtung bezogen auf eine durch den vordefinierten Punkt verlaufende Achse spiegelsymmetrisch ausgestaltet sein.

Gemäß einer weiteren Ausführungsform der Tragstruktur kann der vordefinierte Punkt der Mittelpunkt des Druckbetts oder durch den Mittelpunkt des Druckbetts gebildet sein.

Gemäß einer weiteren Ausführungsform der Tragstruktur kann eine Auflageseite des Druckbetts auf dem Tragboden aufliegen und eine von dem Tragboden weg weisende Ablageseite des Druckbetts kann Vakuumöffnungen aufweisen, um eine Druckfolie mittels Vakuum anzusaugen, und/oder wobei sich Vakuumöffnungen bevorzugt zwischen der Ablageseite und der Auflageseite erstrecken, um eine Druckfolie mittels Vakuum anzusaugen.

Gemäß einer weiteren Ausführungsform der Tragstruktur kann der Tragboden zumindest eine Vakuumleitung aufweisen, wobei die Vakuumleitung gasleitend mit zumindest einer der Vakuumöffnungen verbunden ist.

Gemäß einer weiteren Ausführungsform der Tragstruktur können die Vakuumöffnungen in und/oder quer zur Spannrichtung gleich weit oder unterschiedlich weit zueinander beabstandet angeordnet sein.

Gemäß einer weiteren Ausführungsform der Tragstruktur können die Vakuumöffnungen in ihrem Verlauf einen zunehmenden Querschnitt aufweisen.

Ein weiterer Aspekt der vorliegenden Erfindung betrifft eine Klemmvorrichtung. Die erfindungsgemäße Klemmvorrichtung ist insbesondere ausgebildet als eine Klemmvorrichtung für eine erfindungsgemäße Tragstruktur. Die erfindungsgemäße Klemmvorrichtung ist zur kraftschlüssigen Halterung einer eine mit dreidimensionalen Siebdruckwerkstücken bedruckbaren Druckfläche aufweisenden Druckfolie, wobei die Klemmvorrichtung eine Gegenmontiereinrichtung zur Montage der Klemmvorrichtung an der Spannvorrichtung oder der Montagevorrichtung, insbesondere einer Tragstruktur gemäß dem weiteren Aspekt der Erfindung, aufweist.

Gemäß einer weiteren Ausführungsform der Klemmvorrichtung kann die Gegenmontiereinrichtung zumindest abschnittsweise stiftförmig ausgestaltet ist, wobei die zumindest abschnittsweise stiftförmige Gegenmontiereinrichtung in ihrem Verlauf bevorzugt einen die Stiftform zumindest teilweise umlaufenden und von der Stiftform vorspringenden, insbesondere radial vorspringenden, und/oder umlaufenden Montierflansch aufweist.

Gemäß einer weiteren Ausführungsform der Klemmvorrichtung kann diese eine Montierplatte, an der die Gegenmontiereinrichtung befestigt ist, und/oder eine relativ zur Montierplatte um eine Schwenkachse schwenkbare Klemmplatte aufweisen.

Gemäß einer weiteren Ausführungsform der Klemmvorrichtung können die Montierplatte und die Klemmplatte einander gegenüberliegende Klemmflächen aufweisen, wobei im Betrieb der Klemmvorrichtung oder der Klemmflächen eine Druckfolie zwischen den Klemmflächen verklemmt ist, wobei eine der Klemmflächen bevorzugt ein elastisches Klemmelement aufweist.

Gemäß einer weiteren Ausführungsform der Klemmvorrichtung kann das Klemmelement zumindest abschnittsweise in einer Vertiefung angeordnet sein, die in der einen der Klemmflächen, an der das Klemmelement befestigt ist, angeordnet ist.

Gemäß einer weiteren Ausführungsform der Klemmvorrichtung eine federelastische Verbindungsplatte aufweisen, wobei die federelastische Verbindungsplatte bevorzugt die Montierplatte und die Klemmplatte unverschiebbar miteinander verbindet und/oder federelastisch zueinander in einer Klemmstellung hält.

Gemäß einer weiteren Ausführungsform der Klemmvorrichtung kann die Verbindungsplatte zwei quer zur Schwenkachse voneinander beabstandete Befestigungsbereiche aufweisen, wobei einer der Befestigungsbereiche an der Montierplatte und der andere der Befestigungsbereiche an der Klemmplatte befestigt ist und/oder wobei die Befestigungsbereiche jeweils beabstandet von der Schwenkachse angeordnet sind.

Gemäß einer weiteren Ausführungsform der Klemmvorrichtung kann der eine der Befestigungsbereiche zwischen dem anderen der Befestigungsbereiche und den Klemmflächen angeordnet sein.

Gemäß einer weiteren Ausführungsform der Klemmvorrichtung kann die Klemmfläche der Klemmplatte quer zur Schwenkachse an ein Ende der Klemmplatte angrenzen und der andere der Befestigungsbereiche an ein dem einen Ende der Klemmplatte gegenüberliegenden anderen Ende der Klemmplatte angrenzen.

Gemäß einer weiteren Ausführungsform der Klemmvorrichtung kann sich das Klemmelement entlang einer Richtung der Schwenkrichtung und/oder parallel zur Schwenkachse zumindest abschnittsweise oder vollständig entlang der Klemmplatte und/oder entlang der Montierplatte erstrecken.

Gemäß einer weiteren Ausführungsform der Klemmvorrichtung kann in einem Klemmzustand der Klemmvorrichtung oder der Klemmflächen, in dem das Klemmelement an der gegenüberliegenden Klemmfläche anliegt oder eine Druckfolie gegen die gegenüberliegende Klemmfläche drückt, das Klemmelement entlang der Schwenkachse verlaufend zumindest abschnittsweise oder durchgängig an der gegenüberliegenden Klemmfläche oder der Druckfolie anliegen.

Gemäß einer weiteren Ausführungsform der Klemmvorrichtung kann diese zwei entlang der Schwenkachse voneinander beanstandete Halteaufnahmen aufweisen.

Gemäß einer weiteren Ausführungsform der Klemmvorrichtung können die Halteaufnahmen entlang einer Richtung der Schwenkachse oder einer Richtung parallel zur Schwenkachse jeweils voneinander weg weisende Enden quer zur Schwenkachse verlaufende lichte Weiten aufweisen, die größer sind, als quer zur Schwenkachse verlaufende lichte Weiten zweier aufeinander zu weisender Enden der Halteaufnahmen.

Gemäß einer weiteren Ausführungsform der Klemmvorrichtung können die Halteaufnahmen schlüssellochförmig ausgebildet sein.

Gemäß einer weiteren Ausführungsform der Klemmvorrichtung kann die Klemmplatte die Halteaufnahmen aufweisen.

Ein weiterer Aspekt der vorliegenden Erfindung betrifft einen Nachrüstsatz. Der erfindungsgemäße Nachrüstsatz ist ein Nachrüstsatz, insbesondere für die erfindungsgemäße Tragstruktur, und weist wenigstens zwei erfindungsgemäße Klemmvorrichtungen auf, insbesondere zwei Klemmvorrichtungen gemäß der vorliegenden Erfindung.

Ein weiterer Aspekt der vorliegenden Erfindung betrifft ebenfalls einen Werkstückträger, insbesondere einen Werkstückträger für die Herstellung dreidimensionaler Siebdruckwerkstücke auf einer Druckfolie. Ein solcher Werkstückträger weist eine erfindungsgemäße Tragstruktur und wenigstens zwei der erfindungsgemäßen Klemmvorrichtungen zur kraftschlüssigen Halterung einer Druckfolie auf, wobei die wenigstens zwei Klemmvorrichtungen an unterschiedlichen Seiten des Druckbetts angeordnet sind, insbesondere wenn eine Druckfolie auf dem Druckbett aufliegt. Dabei kann die Druckfolie eine mit dreidimensionalen Siebdruckwerkstücken bedruckbare Druckfläche aufweisen.

Gemäß einer weiteren Ausführungsform des Werkstückträgers kann eine der wenigstens zwei Klemmvorrichtungen an der Spannvorrichtung bewegungsübertragend befestigt oder befestigbar ist und eine andere der wenigstens zwei Klemmvorrichtungen an der Montagevorrichtung relativ zum Druckbett unverschiebbar befestigt oder befestigbar sein.

Gemäß einer weiteren Ausführungsform des Werkstückträgers kann die eine der wenigstens zwei Klemmvorrichtungen an der Spannvorrichtung und eine andere der wenigstens zwei Klemmvorrichtungen an der Montagevorrichtung wiederholt lösbar befestigt oder befestigbar sein.

Gemäß einer weiteren Ausführungsform des Werkstückträgers können die wenigstens zwei Klemmvorrichtungen gemäß der voranstehenden Beschreibung sein und das Druckbett zumindest eine der Klemmflächen quer zur Schwenkachse überragen und/oder das Druckbett kann mit der Klemmplatte und/oder einer Oberseite der Klemmplatte fluchten.

Ein weiterer Aspekt der vorliegenden Erfindung betrifft ein Verfahren zur Herstellung von dreidimensionalen Siebdruckwerkstücken, insbesondere mit einem voranstehend beschriebenen Werkstückträger. Bei dem erfindungsgemäßen Verfahren zur Herstellung von dreidimensionalen Siebdruckwerkstücken wird eine Druckfolie wiederholt per Siebdruck bedruckt, um in mehreren Druckvorgängen dreidimensionale Siebdruckwerkstücke zu erzeugen.

Das erfindungsgemäße Verfahren kann durch verschiedene, jeweils für sich vorteilhafte und, sofern nicht anders ausgeführt, beliebig miteinander kombinierbare Ausgestaltungen weiter verbessert werden. Auf die vorteilhaften Ausführungsformen und auch auf die mit ihnen verbundenen Vorteile wird im Folgenden näher eingegangen.

Gemäß einer vorteilhaften Ausführungsform können unterschiedliche Randbereiche der Druckfolie mit unterschiedlichen Klemmvorrichtungen verklemmt sein oder werden, um die Druckfolie kraftschlüssig mit den Klemmvorrichtungen zu verbinden. Die Klemmvorrichtungen können davor oder anschließend an unterschiedlichen Seiten einer das Druckbett aufweisenden Tragstruktur befestigt werden, bevor der Siebdruck beginnt. Ein Vorteil einer solchen Ausführungsform kann sein, dass die Druckfolie durch den Kraftschluss sicher durch die Klemmvorrichtungen gehalten und ohne weiteres wieder von den Klemmvorrichtungen lösbar ist. Dabei können die an der Tragstruktur befestigten Klemmvorrichtungen die Druckfolie ohne weiteres gespannt halten, insbesondere während eines Druckvorgangs oder mehrerer Druckvorgänge.

Gemäß einer weiteren Ausführungsform kann die Tragstruktur die erfindungsgemäße Tragstruktur sein, wobei die Spannvorrichtung entgegen der Spannkraft in Richtung auf das Druckbett hin geschoben wird, bevor oder nachdem die Klemmvorrichtungen an der Spannvorrichtung und der Montagevorrichtung befestigt werden. Ein Vorteil einer solchen Ausführungsform kann sein, dass die Druckfolie einfach da spannungsfrei oder mit einer geringen mechanischen Spannung an der Tragstruktur anbringbar ist.

Gemäß einer weiteren Ausführungsform kann die Spannkraft die Spannvorrichtung weg vom Druckbett zu drücken suchen und die Druckfolie auf das Druckbett spannen oder über das Druckbett ziehen, während die dreidimensionalen Siebdruckwerkstücke gedruckt werden. Ein Vorteil einer solchen Ausführungsform kann sein, dass die Druckfolie erst gespannt wird, nachdem die Klemmvorrichtungen montiert wurden, was die Montage der Klemmvorrichtungen vereinfacht. Nach der Montage kann die Druckfolie über das Druckbett gezogen sein, sodass das Druckbett als Ablage für die Druckfolie dienen kann, sodass nicht nur die Spannkraft, sondern auch das Druckbett ungewünschte Bewegungen der Druckfolie während des Siebdrucks verhindern kann.

Gemäß einer weiteren Ausführungsform kann die Spannvorrichtung entgegen der Spannkraft in Richtung auf das Druckbett zu verschoben werden, nachdem die Siebdruckwerkstücke gedruckt wurden, insbesondere um die Klemmvorrichtungen von der Spannvorrichtung und der Montagevorrichtung zu lösen. Ein Vorteil einer solchen Ausführungsform kann sein, dass die die Druckfolie mit den Siebdruckwerkstücken haltenden Klemmvorrichtungen einfacher und gleichzeitig bei hoher Handhabungssicherheit von der Tragstruktur abgenommen werden können.

Gemäß einer weiteren Ausführungsform können die Klemmvorrichtungen von der Tragstruktur, insbesondere von der Spannvorrichtung und der Montagevorrichtung, gelöst werden, um die Druckfolie vom Druckbett zu entnehmen, nachdem die Spannvorrichtung entgegen der Spannkraft in Richtung auf das Druckbett verschoben wurde. Ein Vorteil einer solchen Ausführungsform kann sein, dass die die Druckfolie mit den Siebdruckwerkstücken haltenden Klemmvorrichtungen einfacher von der Tragstruktur abgenommen werden können.

Gemäß einer weiteren Ausführungsform können die dreidimensionalen Siebdruckwerkstücke auf der Druckfolie getrocknet und/oder gehärtet werden bevor oder nachdem die Klemmvorrichtungen von der Tragstruktur abgenommen werden. Ein Vorteil einer solchen Ausführungsform kann sein, dass sich die getrockneten und/oder gehärteten dreidimensionalen Siebdruckwerkstücke bei der Trennung von der Druckfolie weniger verformen als ungehärtete oder ungetrocknete Siebdruckwerkstücke.

Gemäß einer weiteren Ausführungsform können die Siebdruckwerkstücke von der Druckfolie gelöst werden. Ein Vorteil einer solchen Ausführungsform kann sein, dass die von der Druckfolie abgelösten Siebdruckwerkstücke mit nur geringem Handhabungsaufwand weiteren Bearbeitungsschritten zugeführt werden können, beispielsweise einem Sinterschritt und/oder einem Montier- und/oder Verpackungsschritt.

Gemäß einer weiteren Ausführungsform kann eine der Klemmvorrichtungen, an der die die Druckfolie befestigt ist, bewegt werden, um die Druckfolie über eine Schervorrichtung oder Scherkante zu ziehen und die Siebdruckwerkstücke hierdurch von der Druckfolie zu lösen. Alternativ kann zumindest eine der Klemmvorrichtungen zunächst von der Druckfolie abgenommen und die Druckfolie danach über die Scherkante gezogen werden. Ein Vorteil einer solchen Ausführungsform kann sein, dass die Druckfolie durch das Ziehen über die Scherkante einfach von den Siebdruckwerkstücken abgezogen werden kann, wodurch ein Beschädigen der Siebdruckwerkstücke durch das Entfernen der Druckfolie noch unwahrscheinlicher wird.

Ein weiterer Aspekt der vorliegenden Erfindung betrefft ferner eine Vorrichtung zur Herstellung von dreidimensionalen Siebdruckwerkstücken mit einer Druckeinrichtung und mit zumindest einem voranstehend beschriebenen Werkstückträger oder mit einer Mehrzahl von voranstehend beschriebenen Werkstückträgern.

Zum besseren Verständnis der vorliegenden Erfindung wird nachfolgend auf die Zeichnungen Bezug genommen. Diese zeigen schematisch lediglich Ausführungsbeispiele des Erfindungsgegenstands. Merkmale dieser Ausführungsbeispiele sind unabhängig voneinander kombinierbar.

In den Figuren und der dazugehörigen Beschreibung sind gleiche oder gleichwirkende Teile mit den gleichen Bezugszeichen versehen.

Es zeigen:
- Figur 1: einen Werkstückträger gemäß einem Ausführungsbeispiel der vorliegenden Erfindung in einer schematischen Perspektivansicht,
- Figur 2: den Werkstückträger des Ausführungsbeispiels der Figur 1 in einer Aufsicht auf dessen Unterseite,
- Figur 3: den Werkstückträger des Ausführungsbeispiels der Figuren 1 und 2 in einer weiteren Aufsicht auf dessen Unterseite,
- Figur 4: den Werkstückträger des Ausführungsbeispiels der Figuren 1 bis 3 in noch einer weiteren Aufsicht auf dessen Unterseite,
- Figur 5: den Werkstückträger des Ausführungsbeispiels der Figuren 1 bis 4 in einer Schnittdarstellung,
- Figur 6: den Werkstückträger des Ausführungsbeispiels der Figuren 1 bis 5 in einer weiteren Schnittdarstellung,
- Figur 7: den Werkstückträger des Ausführungsbeispiels der Figuren 1 bis 6 in einer weiteren Schnittdarstellung,
- Figur 8: den Werkstückträger des Ausführungsbeispiels der Figuren 1 bis 7 in einer weiteren Schnittdarstellung,
- Figur 9: den Werkstückträger des Ausführungsbeispiels der Figuren 1 bis 8 in noch einer weiteren Schnittdarstellung,
- Figur 10: ein Ausführungsbeispiel zweier Klemmvorrichtungen mit daran befestigter Druckfolie,
- Figur 11: ein Ausführungsbeispiel zweier Klemmvorrichtungen mit daran befestigter Druckfolie während der Trennung von Siebdruckwerkstücken von der Druckfolie und
- Figur 12: ein das Verfahren gemäß einem Ausführungsbeispiel der vorliegenden Erfindung repräsentierendes Flussdiagramm.

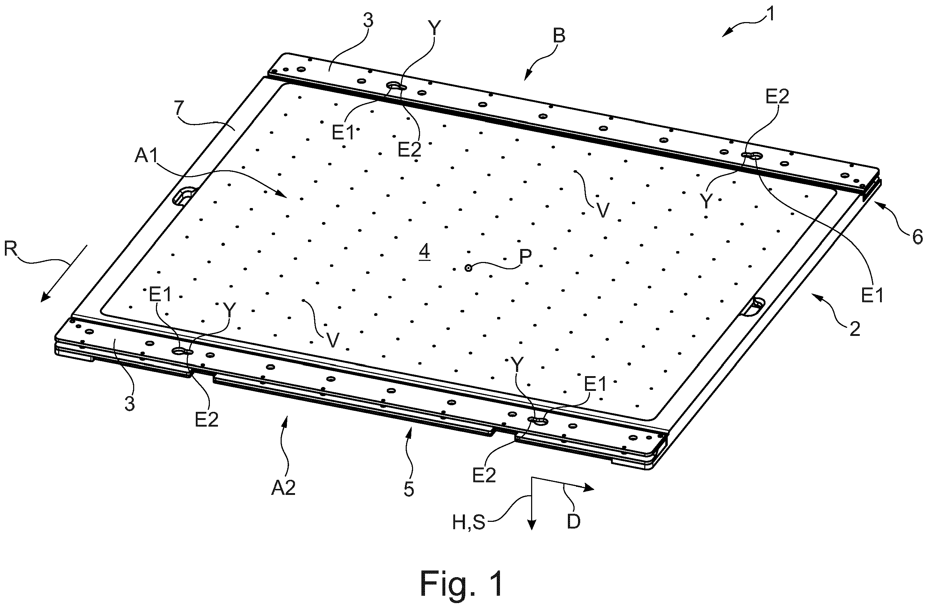

Figur 1 zeigt einen Werkstückträger 1 in einer schematischen Perspektivansicht. Der Werkstückträger 1 kann ein Werkstückträger 1 für die Herstellung dreidimensionaler Siebdruckwerkstücke sein, die hier nicht näher dargestellt sind. Der Werkstückträger 1 weist eine flexiblen Druckfolie, hier ebenfalls nicht näher dargestellt, auf. Die Druckfolie kann nachrüstbar sein. Die Druckfolie weist eine mit dreidimensionalen Siebdruckwerkstücken bedruckbare Druckfläche auf. Der Werkstückträger 1 weist eine Tragstruktur 2 auf. Im Betrieb trägt die Tragstruktur 2 zumindest abschnittsweise die Druckfolie.

Der Werkstückträger 1 weist zumindest eine Klemmvorrichtung 3 zur kraftschlüssigen Halterung der Druckfolie an und/oder auf der Tragstruktur 2 auf.

Gemäß einem Aspekt der Erfindung weist die Tragstruktur 2 ein Druckbett 4 auf. Die Tragstruktur 2 kann eine Tragstruktur 2 für einen Werkstückträger und insbesondere für den Werkstückträger 1 für die Herstellung dreidimensionaler Siebdruckwerkstücke sein.

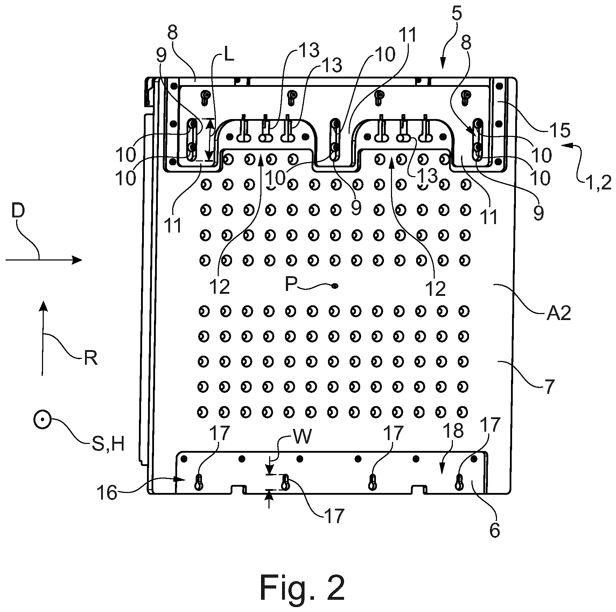

Die Tragstruktur 2 weist eine Spannvorrichtung 5 auf. Die Tragstruktur 2 weist ferner eine Montagevorrichtung 6 auf. Die Spannvorrichtung 5 und die Montagevorrichtung 6 sind an unterschiedlichen und vorzugsweise einander gegenüberliegenden Seiten des Druckbetts 4 angeordnet. Die Spannvorrichtung 5 und die Montagevorrichtung 6 weisen Montiereinrichtungen 16, wie beispielsweise in Figur 2 gezeigt, auf. Mit den Montiereinrichtungen 16 können unterschiedliche Seiten der Druckfolie in Wirkverbindung gebracht werden, insbesondere mittels der Klemmvorrichtung 3 oder den Klemmvorrichtungen 3.

Die Spannvorrichtung 5 ist entgegen einer in eine Spannrichtung R weisenden elastischen Spannkraft auf das Druckbett 4 hin verschiebbar.

Die die Klemmvorrichtung 3 weist eine Gegenmontiereinrichtung zur Montage der Klemmvorrichtung 3 an der Spannvorrichtung 5 oder der Montagevorrichtung 6 auf.

Wenigstens zwei der Klemmvorrichtungen 3 sind gemäß einem Aspekt der Erfindung Bestandteil eines Nachrüstsatzes für eine Tragstruktur und insbesondere für die erfindungsgemäße Tragstruktur 2.

Gemäß einem Aspekt der Erfindung weist der Werkstückträger 1 die Tragstruktur 2 und zumindest eine Klemmvorrichtung 3 oder wenigstens zwei der Klemmvorrichtungen 3 auf, wobei bevorzugt, wenn die Druckfolie auf dem Druckbett 4 aufliegt, die wenigstens zwei Klemmvorrichtungen 3 an unterschiedlichen Seiten des Druckbetts 4 angeordnet sind.

Eine der Klemmvorrichtungen 3 kann relativ zur Tragstruktur 2 bewegbar mit der Tragstruktur 2 verbunden sein. So kann die Tragstruktur 2 einen Tragboden 7 aufweisen, wobei das Druckbett 4 auf dem Tragboden 7 angeordnet sein kann. Die Spannvorrichtung 5 zum Spannen der Druckfolie in der Spannrichtung R kann relativ zum Tragboden 7 und/oder zum Druckbett 4 bewegbar mit dem Tragboden 7 verbunden sein.

Die Klemmvorrichtung 3 oder eine der Klemmvorrichtungen 3 kann bewegungsübertragend mit der Spannvorrichtung 5 verbunden oder verbindbar sein.

Der Tragboden 7 kann mehrere laterale Seiten aufweisen, wobei die Spannvorrichtung 5 an einer der lateralen Seiten des Tragbodens 7 angeordnet sein kann. Die an der einen der lateralen Seiten des Tragbodens 7 angeordnete Spannvorrichtung 5 kann entgegen einer in die Spannrichtung R weisenden elastischen Spannkraft in Richtung auf eine andere der lateralen Seiten des Tragbodens 7 hin verschiebbar sein. Die lateralen Seiten des Tragbodens 7 können einander gegenüberliegen. Die lateralen Seiten des Tragbodens 7 können einander entlang der Spannrichtung R gegenüberliegen.

Die Montagevorrichtung 6 kann an einer der lateralen Seiten des Tragbodens 7 und insbesondere an der der Spannvorrichtung 5 gegenüberliegenden lateralen Seite des Tragbodens 7 angeordnet sein.

Die Montagevorrichtung 6 kann relativ zum Druckbett 4 und/oder zum Tragboden 7 unbeweglich mit dem Tragboden 7 verbunden sein. Die Klemmvorrichtung 3 oder eine der Klemmvorrichtungen 3 kann an der Montagevorrichtung 6 befestigbar oder befestigt ist.

Insbesondere kann die oder eine Klemmvorrichtung 3 wiederholt lösbar and der Montagevorrichtung 6 befestigbar sein. Ferner kann die oder eine Klemmvorrichtung 3 wiederholt lösbar an der Spannvorrichtung 5 befestigbar sein.

Im gezeigten Ausführungsbeispiel weist die Tragstruktur 2 beispielhaft die Spannvorrichtung 5 zum Spannen der Druckfolie und die relativ zum Druckbett 4 und/oder zum Tragboden 7 unbeweglich mit dem Tragboden 7 verbundene Montagevorrichtung 6 auf. Die Spannvorrichtung 5 kann relativ zum Druckbett 4 und/oder zum Tragboden 7 bewegbar mit dem Tragboden 7 verbunden sein. Die Klemmvorrichtung 3 und beispielswiese jede der Klemmvorrichtungen 3 kann ausgestaltet sein, um bewegungsübertragend mit der Spannvorrichtung 5 oder mit der Montagevorrichtung 6 verbindbar zu sein.

Weist der Werkstückträger 1 zwei Klemmvorrichtungen 3 auf, kann eine der Klemmvorrichtungen 3 an der Spannvorrichtung 5 und die andere der Klemmvorrichtungen 3 an der Montagevorrichtung 6 angebracht oder zumindest anbringbar sein. Ferner kann das Druckbett 4 insbesondere entlang der Spannrichtung R zwischen der Spannvorrichtung 5 und der Montagevorrichtung 6 angeordnet sein. Außerdem kann das Druckbett 4 insbesondere entlang der Spannrichtung R zwischen den Klemmvorrichtungen 3 angeordnet sein.

Die Tragstruktur 2 und/oder der Tragboden 7 kann eine in einer beispielhaft dargestellten Betriebsstellung B des Werkstückträgers 1 entgegen die Schwerkraftrichtung S weisende erste Seite A1 und eine der ersten Seite A1 gegenüberliegende zweite Seite A2 aufweisen. Die Spannvorrichtung 5 kann zumindest abschnittsweise an der zweiten Seite A2 angeordnet sein. In der Betriebsstellung B kann die erste Seite A1 die Oberseite der Tragstruktur 2 und/oder des Tragbodens 7 sein. In der Betriebsstellung B kann die zweite Seite A2 die Unterseite der Tragstruktur 2 und/oder des Tragbodens 7 sein. Die erste Seite A1 kann in einer Dickenrichtung H der Tragstruktur 2 und beispielswiese des Tragbodens 7 beabstandet zur zweiten Seite A2 angeordnet sein. In der Betriebsstellung B kann die Schwerkraftrichtung S der Dickenrichtung H entsprechen.

Die Spannrichtung R kann senkrecht zur Dickenrichtung H verlaufen. Ebenso kann die Spannrichtung R entlang oder parallel zu einer Ebenenerstreckung des Druckbetts 4 und/oder der Tragstruktur 2 und/oder des Tragbodens 7 oder quer zu einer Dickenrichtung H des Druckbetts 4 und/oder der Tragstruktur 2 und/oder des Tragbodens 7 verlaufen.

Das Druckbett 4 kann zumindest abschnittsweise mit dem Tragboden 7 fluchten oder stufenlos ausgestaltet sein. Insbesondere können das Druckbett 4 und der Tragboden 7 einander nicht überragen. Das Druckbett 4 und der Tragboden 7 können gemeinsam zumindest einen stufenlosen Abschnitt der ersten Seite A1 der Tragstruktur 2 bilden.

Die Tragstruktur 2 kann eine quer zur Spannrichtung R und zur Dickenrichtung H verlaufenden Längsrichtung D aufweisen. Die Längsrichtung D kann quer zur Spannrichtung R verlaufen. Die Klemmvorrichtung 3 kann an einer sich entlang der Längsrichtung D erstreckenden Seite des Tragbodens 7 angeordnet sein. Die Klemmvorrichtung 3 kann in Dickenrichtung H gesehen auf derselben Seite des Tragbodens 7 wie das Druckbett 4 angeordnet sein, insbesondere auf der Seite A1.

Die Klemmvorrichtung 3 kann zwei entlang der Längsrichtung D voneinander beanstandete Halteaufnahmen Y aufweisen. Entlang der Längsrichtung D voneinander weg weisende Enden E1 der Halteaufnahmen Y können quer zur Längsrichtung D verlaufende lichte Weiten aufweisen, die größer sind, als quer zur Längsrichtung D verlaufende lichte Weiten zweier aufeinander zuweisender Enden E2 der Halteaufnahmen Y. Beispielsweise können die Halteaufnahmen Y als Schlüssellöcher oder schlüssellochförmig ausgeformt sein, insbesondere in einer Draufsicht entlang der Dickenrichtung H.

Die Halteaufnahmen Y können zum Fixieren und/oder Handhaben der jeweiligen Klemmvorrichtung genutzt werden, beispielsweise durch einen Handhabungsroboter oder einen Manipulator. Insbesondere können in die Halteaufnahmen Fixiereinrichtungen eines Handhabungsroboters oder einen Manipulators - hier nicht näher dargestellt - eingeführt und entlang der Längsrichtung der Halteaufnahmen Y aufeinander zu verschoben werden. Derartige Fixiereinrichtungen können stiftförmig und/oder pilzförmig und/oder entsprechend der Gegenmontiereinrichtung 22 - wie nachfolgend beschrieben - ausgebildet sein.

Durch ein Verschieben der Fixiereinrichtungen in gegensätzlichen beziehungsweise aufeinander zu weisenden Richtungen, gelangen die Fixiereinrichtungen ausgehend von den kreisrunden Abschnitten der Halteaufnahmen Y in die jeweils angrenzenden Langlochabschnitte, wodurch ein Formschluss in einer Längsrichtung der Fixiereinrichtungen entsteht. Die Klemmvorrichtungen können hierdurch sicher fixiert und gehandhabt werden.

Das Druckbett 4 kann eine Auflageseite, die auf den Tragboden 7 zu weist und beispielswiese auf dem Tragboden 7 aufliegt, und eine von dem Tragboden 7 weg weisende Ablageseite aufweisen. In der Ablageseite können Vakuumöffnungen V vorgesehen sein, um die Druckfolie mittels Vakuum anzusaugen. Die Vakuumöffnungen V können in und/oder quer zur Spannrichtung R gleich oder unterschiedlich weit zueinander beabstandet angeordnet sein.

Figuren 2 bis 4 zeigen das Ausführungsbeispiel der Figur 1 in einer schematischen Rückansicht, in der die zweite Seite A2 des Tragbodens 7 und/oder der Tragstruktur 2, die auch als Unterseite bezeichnet werden kann, aus der Zeichenebene heraus weist.

Der Tragboden 7 kann ein Lager 8 zum Führen der Bewegung der Spannvorrichtung 5 bereitstellen. Das Lager 8 ist beispielsweise zumindest abschnittsweise in die zweite Seite A2 des Tragbodens 7 und/oder der Tragstruktur 2 eingelassen. Ist die Spannvorrichtung 5 in das Lager 8 eingesetzt, kann die Spannvorrichtung 5 in beabstandet zu oder gleichauf mit der zweiten Seite A2 angeordnet sein oder verlaufen. So kann das Lager 8 in die zweite Seite A2 eingefräst oder eingeformt sein. Das Lager 8 und die Spannvorrichtung 5 können zumindest abschnittsweise komplementär zueinander ausgeformt sein, um die Lagerung und Führung der Spannvorrichtung 5 zu verbessern.

Die Spannvorrichtung 5 kann wenigstens eine Führungsaufnahme 9 aufweisen. Der Tragboden 7 und insbesondere das Lager 8 kann wenigstens einen Führungsvorsprung 10 aufweisen Der Führungsvorsprung 10 kann in die Führungsaufnahme 9 eingreifen.

Die Führungsaufnahme 9 kann entlang der Spannrichtung R eine größere Ausdehnung L aufweisen als der Führungsvorsprung 10. Insbesondere kann die Differenz der Ausdehnung L der Führungsaufnahme 9 und der gleich ausgerichteten Ausdehnung des Führungsvorsprungs 10 die maximale Verschiebbarkeit der Spannvorrichtung 5 in und/oder entgegen der Spannrichtung R vorgeben.

So ist die Spannvorrichtung 5 beispielhaft in Figur 2 in einer maximal oder vollständig entgegen der Spannrichtung R eingeschobenen Position dargestellt. In der maximal oder vollständig entgegen der Spannrichtung R eingeschobenen Position kann ein in die Spannrichtung R weisendes Ende der Führungsaufnahme 9 an einem Führungsvorsprung 10 anliegen.

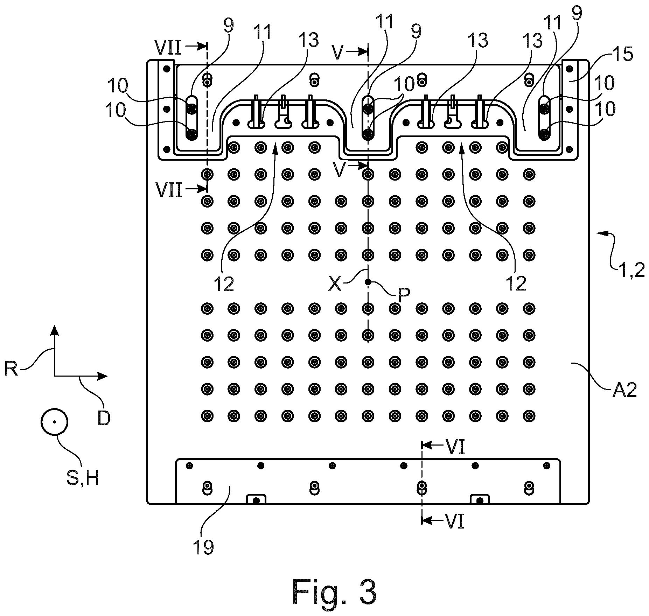

In Figur 3 ist die Spannvorrichtung 5 hingegen beispielhaft in einer maximal oder vollständig in der Spannrichtung R ausgeschobenen Position dargestellt. In der maximal oder vollständig in der Spannrichtung R ausgeschobenen Position kann ein entgegen die Spannrichtung R weisendes Ende der Führungsaufnahme 9 an einem Führungsvorsprung 10 anliegen.

Zwischen der maximal eingeschobenen Position und der maximal ausgeschobenen Position kann, bei geeigneter Dimensionierung einer in die Klemmvorrichtungen 3 eingeklemmten Druckfolie, die Spannvorrichtung 5 eine Betriebs- oder Spannposition aufweisen, in der in und entgegen der Spannrichtung R weisende Enden der Führungsaufnahme 9 vom Führungsvorsprung 10 oder von den Führungsvorsprüngen 10 beabstandet angeordnet sind. Die Spannvorrichtung 5 kann im Betrieb des Werkstückträgers 1 durch eine Spannung der gespannten Druckfolie in der Betriebs- oder Spannposition gehalten sein.

Im dargestellten Ausführungsbeispiel weist der Tragboden 7 beispielhaft mehrere Führungsvorsprünge 10 auf, von denen wenigstens zwei entlang der Spannrichtung R hintereinander angeordnet sind und in die Führungsaufnahme 9 eingreifen. Die beiden entlang der Spannrichtung R hintereinander angeordneten Führungsvorsprünge 10 können als Führungsvorsprungpaar bezeichnet werden. Die Ausdehnung L der das Führungsvorsprungpaar aufnehmenden Führungsaufnahme 9 kann größer sein, als der Abstand voneinander entlang der Spannrichtung weg weisender Seiten der das Führungsvorsprungpaar bildenden Führungsvorsprünge 10. Die Differenz der Ausdehnung L der Führungsaufnahme 9 und des Abstands der voneinander weg weisenden Seiten kann die maximale Verschiebbarkeit der Spannvorrichtung 5 in und/oder entgegen der Spannrichtung R bestimmen.

So ist die Spannvorrichtung 5 beispielhaft in Figur 2 in der maximal oder vollständig entgegen der Spannrichtung R eingeschobenen Position dargestellt. In der maximal oder vollständig entgegen der Spannrichtung R eingeschobenen Position kann der in der Spannrichtung R hinter dem anderen Führungsvorsprung 10 des Führungsvorsprungpaars angeordnete Führungsvorsprung 10 am in die Spannrichtung R weisenden Ende der Führungsaufnahme 9 anliegen.

In Figur 3 ist die Spannvorrichtung 5 hingegen beispielhaft in einer maximal oder vollständig in der Spannrichtung R ausgeschobenen Position dargestellt. In der maximal oder vollständig in der Spannrichtung R ausgeschobenen Position kann ein entgegen die Spannrichtung R weisendes Ende der Führungsaufnahme 9 am Führungsvorsprung 10 anliegen. In der maximal oder vollständig in der Spannrichtung R ausgeschobenen Position kann der in der Spannrichtung R vor dem anderen Führungsvorsprung 10 des Führungsvorsprungpaars angeordnete Führungsvorsprung 10 am entgegen die Spannrichtung R weisenden Ende der Führungsaufnahme 9 anliegen.

Zwischen der maximal oder vollständig eingeschobenen Position und der maximal oder vollständig ausgeschobenen Position kann, bei geeigneter Dimensionierung einer durch die Klemmvorrichtungen 3 eingeklemmten oder gehaltenen Druckfolie, die Spannvorrichtung 5 eine Betriebs- oder Spannposition aufweisen, in der in und entgegen der Spannrichtung R weisende Enden der Führungsaufnahme 9 von den Führungsvorsprüngen 10 beabstandet angeordnet sind. Die Spannvorrichtung 5 kann im Betrieb des Werkstückträgers 1 durch eine Spannung der gespannten Druckfolie in der Betriebs- oder Spannposition gehalten sein.

Die Spannvorrichtung 5 kann mindestens eine entgegen der Spannrichtung R vorspringende Führungszunge 11 aufweisen. Die Führungszunge 11 kann mit der Führungsaufnahme 10 versehen sein. Die Spannvorrichtung 5 kann mehrere Führungszungen 11 aufweisen, von denen zumindest ausgewählte mit der Führungsaufnahme 10 versehen sein können. Die Führungszungen 11 können quer zur Spannrichtung R hinter- oder nebeneinander angeordnet sein. Die Führungszungen 11 können entlang der quer zur Spannrichtung R verlaufenden Längsrichtung D der Tragstruktur 2 hinter- oder nebeneinander angeordnet sein.

Die Tragstruktur 2 und beispielswiese der Tragboden 7 kann mehrere quer zur Spannrichtung R oder entlang der Längsrichtung D hintereinander angeordnete Führungsvorsprünge 10 aufweisen. Zwischen zwei der quer zur Spannrichtung R oder entlang der Längsrichtung D hintereinander angeordneten Führungsvorsprüngen 10 kann zumindest eine die elastische Spannkraft aufbringende Federvorrichtung 12 angeordnet sein. Beispielsweise kann die Federvorrichtung 12 zwischen zwei der Führungszungen 11 angeordnet sein.

Die Tragstruktur 2 und beispielswiese der Tragboden 7 kann mehrere Federvorrichtungen 12 aufweisen. Je eine der Federvorrichtungen 12 kann zwischen zwei quer zur Spannrichtung R oder entlang der Längsrichtung D neben- oder hintereinander angeordneten Führungsvorsprüngen 10 oder zwischen zwei anderen der mehrere Federvorrichtungen 12 angeordnet sein kann.

Die Tragstruktur 2 und beispielswiese der Tragboden 7 kann mindestens eine Federvorrichtungsaufnahme 13 zur Aufnahme der Federvorrichtung 12 aufweisen. Die Federvorrichtungsaufnahme 13 kann in den Tragboden 7 eingelassen sein. Die Federvorrichtungsaufnahme 13 kann zwischen zwei der Führungszungen 11 angeordnet sein. In der Federvorrichtungsaufnahme 13 oder zumindest in ausgewählten der Federvorrichtungsaufnahmen 13 kann eine der Federvorrichtungen 12, etwa ein Federelement, angeordnet sein, dass die Spannkraft elastisch beziehungsweise federelastisch aufbringt. Das Federelement kann beispielsweise ein Hydraulikzylinder, ein Pneumatikzylinder, eine Spiralfeder, eine Tellerfederstapel, eine Gummifeder oder eine andere Kompressionsfeder sein.

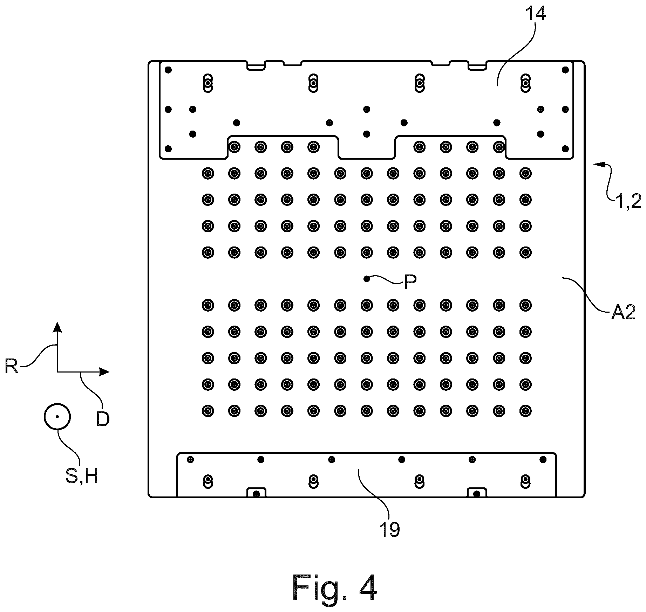

Wie aus Figur 4 ersichtlich, kann die Tragstruktur 2 eine Spannvorrichtungsabdeckungsplatte 14 aufweisen. Die Tragstruktur 2 und beispielswiese der Tragboden 7 kann eine Abdeckungsaufnahme 15 aufweisen, die in die Tragstruktur 2 und beispielswiese in den Tragboden 7 eingelassen sein kann. Die Abdeckungsaufnahme 15 kann in die Tragstruktur 2 und beispielswiese in den Tragboden 7 eingefräst oder eingeformt sein. Die Abdeckungsaufnahme 15 kann in der Dickenrichtung H hinter der Führungsaufnahme 9 angeordnet sein. Die Führungsaufnahme 9 kann in der Dickenrichtung H auf Höhe oder im Wesentlichen auf Höhe der der Federvorrichtungsaufnahme 13 angeordnet sein und ferner kann die Federvorrichtungsaufnahme 13 angrenzend an die Abdeckungsaufnahme 15 angeordnet sein.

Die Federvorrichtungsaufnahme 13 kann in die Tragstruktur 2 und/oder in den Tragboden 7 eingelassen und beispielswiese gefräst oder eingeformt sein. Die Führungsaufnahme 9 kann in die Spannvorrichtung 5 eingelassen und beispielswiese gefräst oder eingeformt sein.

Wie beispielhaft in Figur 2 gezeigt, können die Montiereinrichtungen 16 der Montagevorrichtung 6 und/oder der Spannvorrichtung 5 - die Montiereinrichtungen 16 der Spannvorrichtung 5 sind hier verdeckt und damit nicht näher gezeigt - Montageaufnahmen 17 aufweisen. Die Montageaufnahmen 17 der Spannvorrichtung 5 und der Montagevorrichtung 6 können entlang der Spannrichtung R eine lichte Weite oder Ausdehnung W aufweisen.

Die Summe der Ausdehnung W wenigstens eines Abschnitts einer der Montageaufnahmen 17 der Spannvorrichtung 5 entlang der Spannrichtung R und der Ausdehnung W wenigstens eines Abschnitts einer der Montageaufnahmen 17 der Montagevorrichtung 6 entlang der Spannrichtung R kann kleiner sein als die maximale Verschiebbarkeit der Spannvorrichtung 5.

Wenigstens ausgewählte der Montageaufnahmen 17 können zumindest abschnittsweise als Langlöcher ausgebildet sein. Die Längsachse der Langlöcher kann im Wesentlichen entlang der Spannrichtung R verlaufend ausgerichtet sein. Wenigstens ausgewählte der Montageaufnahmen 17 können schlüssellochförmig ausgebildet sein. Die schlüssellochförmigen Montageaufnahmen 17 können einen Langlochabschnitt und einen an einem vom Tragboden weg weisenden Längsende des Langlochabschnitts angeordneten kreisförmigen Abschnitt aufweisen.

Die Tragstruktur 2 und beispielswiese der Tragboden 7 kann eine Aufnahme 18 für eine die Montagevorrichtung 6 abdeckende Montagevorrichtungsabdeckungsplatte 19 aufweisen. Die Aufnahme 18 kann sich in Richtung der zweiten Seite A2 öffnen. Die Aufnahme 18 kann in den Tragboden 7 eingelassen und beispielsweise gefräst oder eingeformt sein. Die Montagevorrichtung 6 kann mit dem Tragboden 7 verschraubt sein oder auch stoffschlüssig oder anderweitig kraft- und/oder formschlüssig an dem Tragboden befestigt sein.

Die Tragstruktur 2 kann einen vordefinierten Punkt P aufweisen. Die Spannvorrichtung 5 sowie die Montagevorrichtung 6 können im Wesentlichen rotationssymmetrisch zu dem vordefinierten Punkt angeordnet sein. Insbesondere können die Spannvorrichtung 5 sowie die Montagevorrichtung 6 zueinander bezogen auf den Punkt P rotationssymmetrisch angeordnet sein, wenn die Spannvorrichtung 5 in der teilweise eingeschobenen Betriebs- oder Spannposition angeordnet ist. Insbesondere können Positionen, an denen die Spannvorrichtung 5 und die Montagevorrichtung 6 an der Tragstruktur 2 angeordnet sind, rotationssymmetrisch zu dem vordefinierten Punkt angeordnet sein.

Die Spannvorrichtung 5 und optional die Montagevorrichtung 6 kann bezogen auf eine durch den vordefinierten Punkt P verlaufende Achse X spiegelsymmetrisch ausgestaltet sein. Die Achse X kann parallel zur Spannrichtung R verlaufen.

Der vordefinierte Punkt P kann der Mittelpunkt des Druckbetts sein.

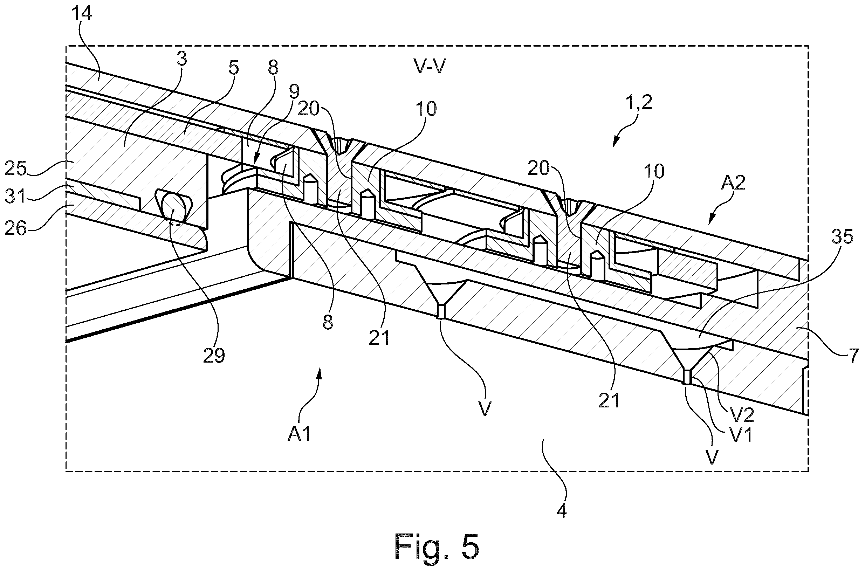

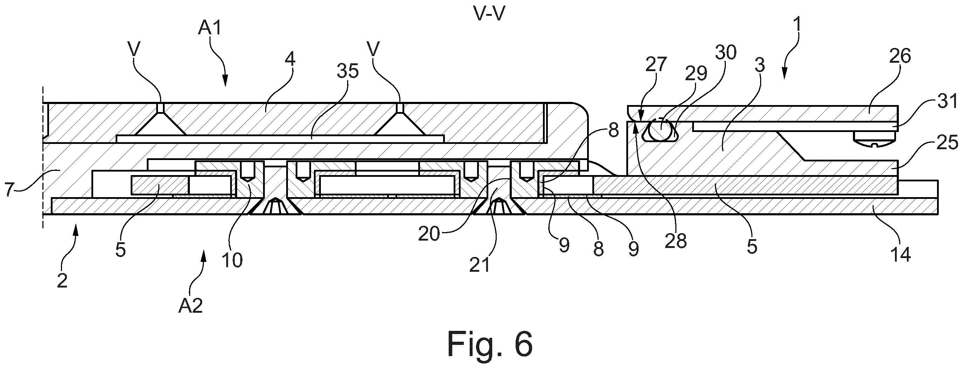

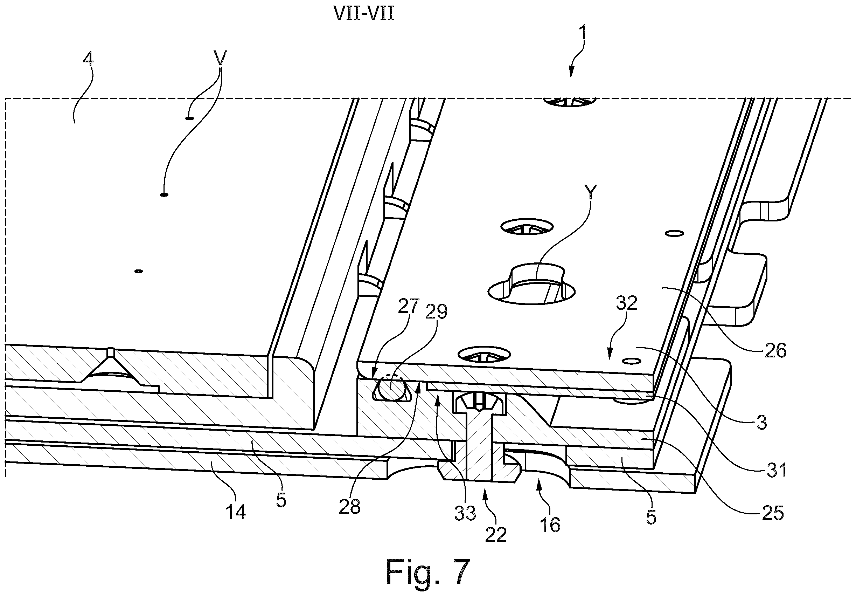

Figur 5 zeigt eine perspektivische Schnittdarstellung des Ausführungsbeispiels, welches entlang der Achse X beziehungsweise der Schnittlinie V-V in Figur 3 geschnitten ist. Eine weitere Schnittdarstellung des Ausführungsbeispiels entlang der der Achse X beziehungsweise der Schnittlinie V-V in Figur 3 ist in Figur 6 dargestellt. Schließlich zeigt Figur 7 eine Schnittdarstellung entlang der Schnittlinie VII-VII in Figur 3.

Wie in Figur 5 und auch der Figuren 6 zu erkennen ist, kann der Führungsvorsprung 10 ein Befestigungselement 20 für ein die Spannvorrichtungsabdeckungsplatte 14 am Tragboden 7 befestigendes Gegenbefestigungselement 21 aufweisen. In Figur 5 ist das Befestigungselement 20 beispielhaft als eine Schraubaufnahme ausgebildet. Das Gegenbefestigungselement 21 ist beispielhaft als eine in die Schraubaufnahme eingeschraubte Schraube dargestellt.

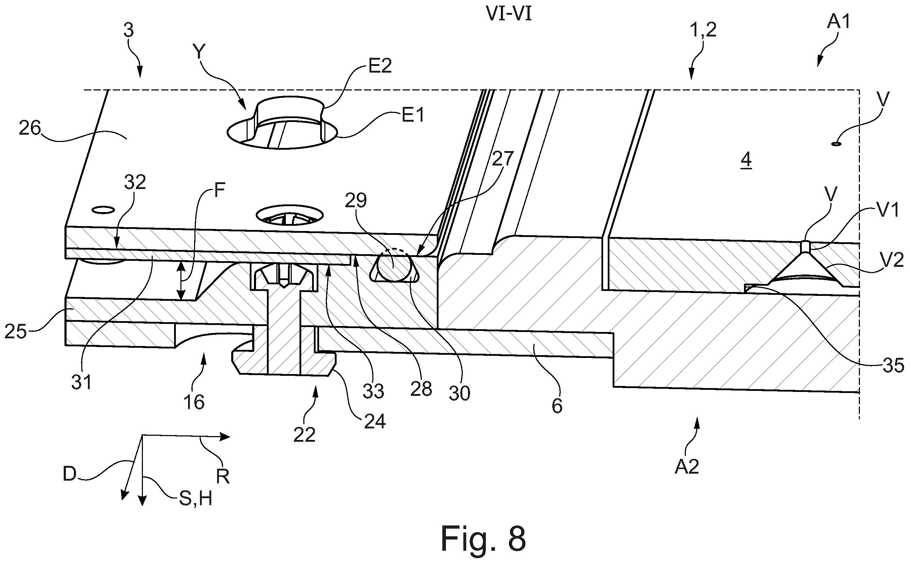

Figur 8 zeigt eine weitere Schnittdarstellung des Ausführungsbeispiels, welches entlang einer in der Figur 3 mit VI bezeichneten Schnittlinie geschnitten ist.

Wie in Figur 8 zu erkennen ist, kann die Montagevorrichtung 6 eine Montiereinrichtung 16 aufweisen. Die Klemmvorrichtung 3 kann eine Gegenmontiereinrichtung 22 zur Befestigung der Klemmvorrichtung 3 an der Montagevorrichtung 6 aufweisen. Die Spannvorrichtung 5 kann in vergleichbarer Weise eine Montiereinrichtung 16 aufweisen, wie in Figur 7 zu erkennen ist. Die Gegenmontiereinrichtung 22 kann zur bewegungsübertragenden Anbringung der Klemmvorrichtung 5 an einer Montiereinrichtung 16 der Spannvorrichtung 5 - in Figur 7 näher dargestellt - ausgebildet sein.

Die Gegenmontiereinrichtung 22 kann zumindest abschnittsweise stiftförmig ausgestaltet sein. Ein Stiftabschnitt 23 der Gegenmontiereinrichtung 22 kann in seinem Verlauf, etwa entlang der Dickenrichtung H, wenigstens einen den Stiftabschnitt 23 zumindest teilweise umlaufenden und vom Stiftabschnitt 23 weg vorspringenden Montierflansch 24 aufweisen. Beispielsweise kann der Montierflansch 24 quer zur Dickenrichtung H vom Stiftabschnitt 23 weg oder in einer Radialrichtung vorspringen.

Im in der Figur 8 dargestellten montierten Zustand der Klemmvorrichtung 3, in der die Klemmvorrichtung 3 an der Montagevorrichtung 6 - oder vergleichbar an der Spannvorrichtung 5 - montiert ist, kann der Stiftabschnitt 23 in der Montageaufnahme 17 und insbesondere in deren Langlochabschnitt angeordnet sein. Der Montierflansch 24 kann an der von der ersten Seite A1 weg weisenden Seite der Montagevorrichtung 6 (oder vergleichbar der Spannvorrichtung 5) aufliegen. Die Montagevorrichtung 6 (oder die Spannvorrichtung 5) kann also zumindest abschnittsweise zwischen dem Montierflansch 24 und Teilen der restlichen Klemmvorrichtung 3 angeordnet sein.

Die Klemmvorrichtung 3 kann eine Montierplatte 25 zum Montieren der Klemmvorrichtung 3 an der Tragstruktur 2 und zum Beispiel an der Montagevorrichtung 6 - oder an der Spannvorrichtung 5 - aufweisen. Die Klemmvorrichtung 3 kann ferner eine Klemmplatte 26 aufweisen. Die Klemmplatte 26 kann relativ zur Montierplatte 25 schwenkbar sein, insbesondere um eine Schwenkachse schwenkbar sein. Die Schwenkachse kann parallel zur Längsrichtung D verlaufen.

Die Montierplatte 25 und die Klemmplatte 26 können einander gegenüberliegende Klemmflächen 27, 28 aufweisen. Im Betrieb der Klemmvorrichtung 3 kann die Druckfolie zwischen den Klemmflächen 27, 28 verpresst oder verklemmt und hierdurch kraftschlüssig gehalten sein. Das Druckbett 4 kann zumindest eine der Klemmflächen 27, 28 quer zur Schwenkachse und/oder in beziehungsweise entgegen der Dickenrichtung H überragen. Ferner kann das Druckbett 4 mit der Klemmplatte 4 beziehungsweise mit einer Oberseite der Klemmplatte 4 fluchten, insbesondere wenn die Klemmflächen 27, 28 aneinander anliegen oder eine Druckfolie gegen eine der Klemmflächen 28 gedrückt ist.

An einer der Klemmflächen 27, 28 kann ein elastisches und beispielsweise federelastisches Klemmelement 29 angebracht sein. Das elastische Klemmelement 29 kann Kunststoff oder Gummi aufweisen oder daraus bestehen. Das elastische Klemmelement 29 kann entlang der Schwenkachse vollständig entlang der Klemmplatte 26 und/oder entlang der Montierplatte 25 verlaufen.

In einem Klemmzustand der Klemmvorrichtung 3, in dem das Klemmelement 29 an der gegenüberliegenden Klemmfläche 28 anliegt oder eine Druckfolie gegen die gegenüberliegende Klemmfläche 28 drückt, kann das Klemmelement 29 entlang der Schwenkachse oder der Längsrichtung D zumindest abschnittsweise oder durchgängig an der gegenüberliegenden Klemmfläche 28 oder der Druckfolie anliegen. Das elastische Klemmelement 29 kann zumindest abschnittsweise in einer in der einen der Klemmflächen 27, an der das elastische Klemmelement 29 befestigt ist, vorgesehenen Vertiefung 30 angeordnet sein. Die Vertiefung 30 kann als eine Nut ausgebildet sein. Die Nut kann einen trapezförmigen Querschnitt aufweisen. Die schmale Seite des Trapezes kann sich zur gegenüberliegenden Klemmfläche 28 öffnen.

Die Klemmvorrichtung 3 kann eine federelastische Verbindungsplatte 31 aufweisen. Die federelastische Verbindungsplatte 31 kann die Montierplatte 25 und die Klemmplatte 26 unverschiebbar miteinander verbinden und/oder federelastisch zueinander abstützen.

Die federelastische Verbindungsplatte 31 kann zwei quer zur Schwenkachse voneinander beabstandete Befestigungsbereiche 32, 33 aufweisen. Einer der Befestigungsbereiche 33 kann an der Montierplatte 25 und der andere der Befestigungsbereiche 32 an der Klemmplatte 26 befestigt sein. Der eine der Befestigungsbereiche 33 kann zwischen dem anderen der Befestigungsbereiche 32 und den Klemmflächen 27, 28 angeordnet sein. Die Klemmfläche 28 der Klemmplatte 26 kann quer zur Schwenkachse (oder entlang der Spannrichtung R) an ein Ende der Klemmplatte 26 angrenzen. Der andere der Befestigungsbereiche 32 kann an ein dem einen Ende der Klemmplatte 26 beispielswiese quer zur Schwenkachse oder entlang der Spannrichtung R gegenüberliegenden anderen Ende der Klemmplatte 26 angrenzen. Die Schwenkachse kann zwischen den Befestigungsbereichen 32, 33 verlaufen.

An einer von der Tragstruktur 2 weg weisenden Seite der Klemmvorrichtung 3 kann im Klemmzustand der Klemmvorrichtung 3 zwischen der Montierplatte 25 und der Klemmplatte 26 oder zwischen der Montierplatte 25 und der und der Verbindungsplatte 31 eine lichte Weite oder ein Abstand F verbleiben. Um die Klemmvorrichtung 3 zu öffnen und hierdurch die Klemmflächen entlang der Dickenrichtung H oder quer zur Schwenkachse voneinander weg zu bewegen, kann das von der Tragstruktur 2 weg weisende Ende der Klemmplatte 26 auf die Montierplatte 25 zu geschwenkt werden, wodurch sich der Abstand F verringert. Liegt das von der Tragstruktur 2 weg weisende Ende der Klemmplatte 26 an der Montierplatte 25 an, kann die Klemmvorrichtung 3 maximal geöffnet sein. Die Klemmplatte 26 kann ferner die Halteaufnahmen Y aufweisen.

Zumindest ausgewählte der Vakuumöffnungen V können in ihrem Verlauf, insbesondere von der ersten Seite A1 in Richtung auf die zweite Seite A2, einen zunehmenden Querschnitt aufweisen.

Beispielsweise kann ein an die erste Seite A1 angrenzender Abschnitt V1 der Vakuumöffnungen V tunnel- oder rohrförmig, also mit einem konstanten Querschnitt, ausgestaltet sein. An einem auf die zweite Seite A2 hin weisenden Ende des tunnel- oder rohrförmigen Abschnitts V1 kann sich ein trichterförmiger Abschnitt V2 der Vakuumöffnung V anschließen.

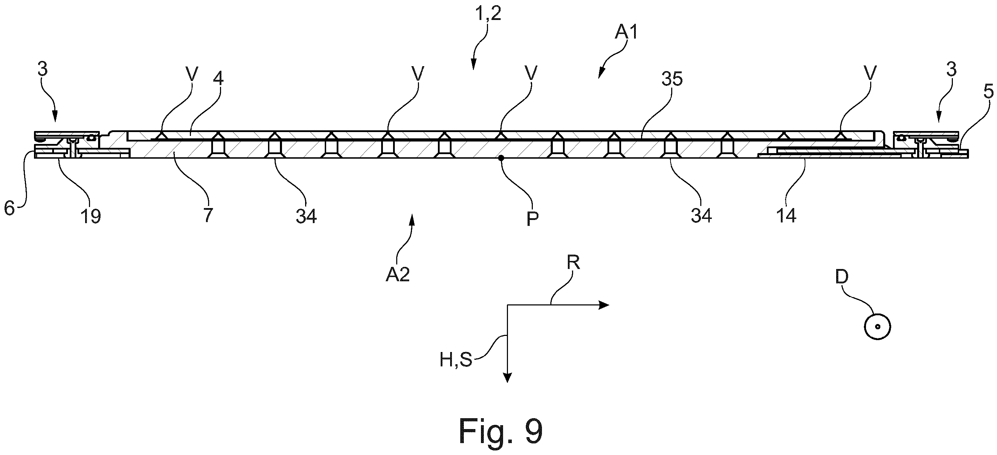

Figur 9 zeigt eine vollständige Schnittansicht des Werkstückträgers 1, der entlang einer Ebene, die sich parallel zur Spannrichtung R und der Dickenrichtung H erstreckt, geschnitten ist.

Der Tragboden 7 kann mindesten eine Vakuumleitung 34 und beispielsweise mehrere Vakuumleitungen 34 aufweisen. Zumindest eine der Vakuumleitungen 34 kann gasleitend mit einer der Vakuumöffnungen V verbunden sein. Die Vakuumleitung 34 kann sich in der Dickenrichtung H durch den Tragboden 7 erstrecken. Ein zur Vakuumöffnung V weisendes Ende der Vakuumleitung 34 kann einen Durchmesser aufweisen, der dem Durchmesser des zur Vakuumleitung 34 weisenden Endes der Vakuumöffnung V entsprechen kann.

Ein Abschnitt der Vakuumleitung 34, der an dem Ende der Vakuumleitung 34, das zur Vakuumöffnung V weist, angrenzt, kann einen konstanten Querschnitt aufweisen. Ein von der Vakuumöffnung V entfernt liegendes und/oder von der Vakuumöffnung V weg weisendes Ende der Vakuumleitung 34 kann einen sich in Richtung auf die zweite Seite A2 zu vergrößernden Querschnitt aufweisen. In der zweiten Seite A2 mündend kann die Vakuumleitung 34 ihren maximalen Querschnitt aufweisen.

Der Tragboden 7 kann mehrere Vakuumleitungen 34 aufweisen, von denen jede gasleitend mit einer der Vakuumöffnungen V verbunden sein kann. Beispielsweise können die Vakuumleitungen 34 in der Dickenrichtung H jeweils hinter einer der Vakuumöffnungen V angeordnet sein.

Die Anzahl der Vakuumleitungen 34 des Tragbodens 7 kann der Anzahl der Vakuumleitungen 34 entsprechen. Alternativ kann die Anzahl der Vakuumleitungen 34 des Tragbodens 7 geringer sein als der Anzahl der Vakuumleitungen 34. Um alle Vakuumöffnungen V durch die Vakuumleitung(en) 34 mit Vakuum versorgen zu können, kann die Tragstruktur 2 eine Verbindungsleitung 35 aufweisen, die mehrere Vakuumöffnungen V mit wenigstens einer Vakuumleitung 34 gasleitend verbindet.

Die Verbindungsleitung 35 kann sich in der Längsrichtung D und/oder in der Spannrichtung R erstrecken. Erstreckt sich die Verbindungsleitung 35 in der Längsrichtung D und in der Spannrichtung R, kann die Verbindungsleitung 35 als eine Verbindungsebene ausgebildet sein. Beispielsweise kann das Druckbett 4 die Verbindungsebene in der Längsrichtung D und in der Spannrichtung R begrenzen, etwa wenn ein der zweiten Seite A2 zugewandter Rand des Druckbetts 4 am Tragboden 7 aufliegt und der Rand einen Bereich umläuft, der vom Tragboden 7 beabstandet ist oder an diesen angrenzt und die Verbindungsebene bildet.

Alternativ oder zusätzlich kann der Tragboden 7 die Verbindungsebene in der Längsrichtung D und in der Spannrichtung R begrenzen, etwa wenn das Druckbett 4 auf einer der ersten Seite A1 zugewandten Wölbung oder Stufe des Tragbodens 7 aufliegt und die Wölbung oder Stufe einen Bereich umläuft, der vom Druckbett 4 beabstandet ist oder an diesen angrenzt und die Verbindungsebene bildet.

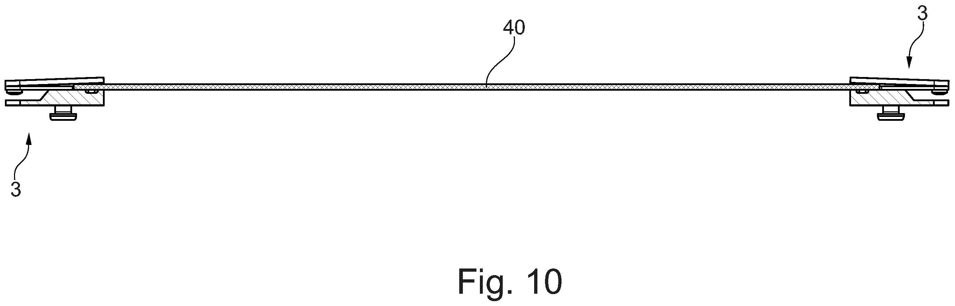

Figur 10 zeigt eine schematische Seitenansicht zweier Klemmvorrichtungen 3, die beispielhaft an unterschiedlichen und insbesondere einander gegenüberliegenden Seiten einer Druckfolie 40 angebracht sind. Die Seiten oder Ränder der Druckfolie 40 sind an den Klemmvorrichtungen 3 durch verklemmen oder verpressen kraftschlüssig befestigt.

Beispielsweise kann die Druckfolie 40 an den Klemmvorrichtungen 3 angebracht werden, bevor oder nachdem die Klemmvorrichtungen 3 an der Tragstruktur 2 und beispielsweise an der Spannvorrichtung 5 und der Montagevorrichtung 6 angebracht werden.

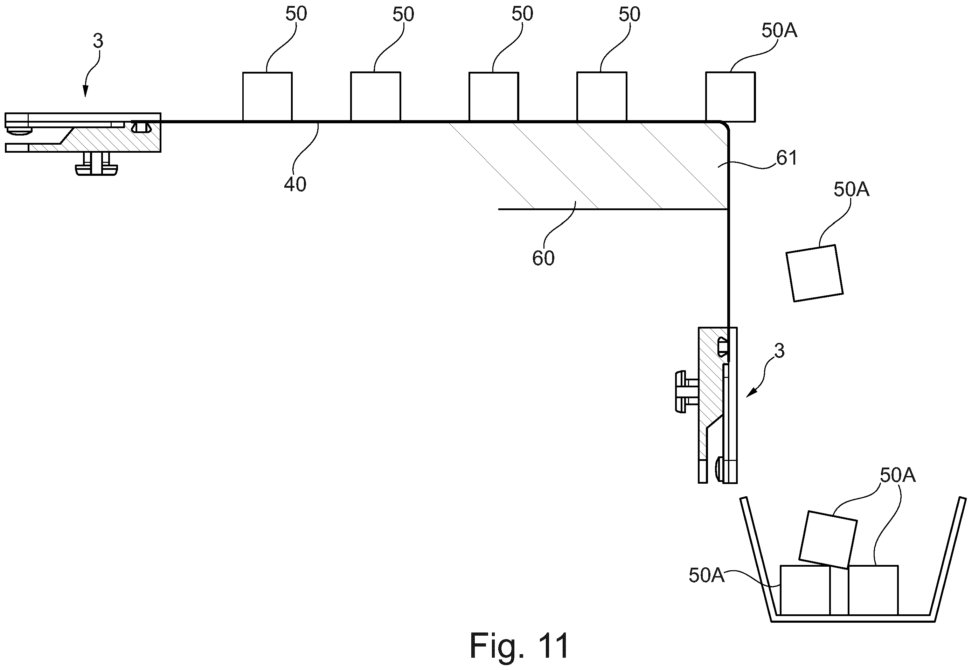

Figur 11 zeigt die mit dreidimensionalen Siebdruckwerkstücken 50 bedruckte Druckfolie 40 in einer schematischen Seitenansicht. Die Druckfolie 40 wurde von der Tragstruktur 2 abgenommen. Zumindest eine der Klemmvorrichtungen 3 kann noch an der Druckfolie 40 befestigt sein. Insbesondere beide Klemmvorrichtungen 3 können noch an der Druckfolie 40 befestigt sein.

Es kann eine Ablösevorrichtung 60 vorgesehen sein, um die Druckfolie 40 von den Siebdruckwerkstücken 50 abzulösen. Die Ablösevorrichtung 60 kann als Schervorrichtung ausgebildet sein und/oder eine Scherkante 61 aufweisen, über die die Druckfolie 40 gezogen oder geführt werden kann, um die Druckfolie 40 zu verformen und beispielswiese zu biegen und/oder zu strecken, um die Druckfolie 40 von den Siebdruckwerkstücken 50 abzulösen beziehungsweise umgekehrt. Beispielswiese kann die Druckfolie 40 um die Scherkante 61 herum gezogen werden. Ein Siebdruckwerkstück, von dem die Druckfolie 40 bereits abgelöst wurde, ist mit dem Bezugszeichen 50A versehen.

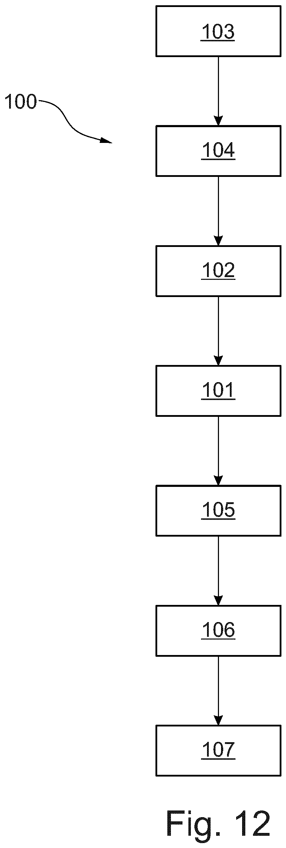

Figur 12 zeigt ein Verfahren zur Herstellung von dreidimensionalen Siebdruckwerkstücken schematisch als Flussdiagramm. Für Elemente, die in Form oder Funktion Elementen der vorherigen Ausführungsbeispiele entsprechen können, werden nachfolgend dieselben Bezugszeichen verwendet.

Das Verfahren 100 kann mit einem Verfahrensschritt 101 die Druckfolie 40 wiederholt per Siebdruck bedrucken, um die dreidimensionalen Siebdruckwerkstücke 50 zu erzeugen.

Ferner kann das Verfahren 100 einen weiteren Verfahrensschritt 102 aufweisen, bei dem die Druckfolie 40 über ein Druckbett 4 gespannt und anschließend in Verfahrensschritt 101 wiederholt per Siebdruck bedruckt wird, um die dreidimensionalen Siebdruckwerkstücke zu erzeugen.

Ferner kann das Verfahren 100 einen weiteren Verfahrensschritt 103 aufweisen, bei dem unterschiedliche Randbereiche der Druckfolie 40 kraftschlüssig an unterschiedlichen Klemmvorrichtungen 3 befestigt werden, wobei die Klemmvorrichtungen 3 anschließend, insbesondere gemäß Verfahrensschritt 104, an unterschiedlichen Seiten der das Druckbett 4 aufweisenden Tragstruktur 2 befestigt werden, bevor dann in der weiteren Folge der Siebdruck gemäß Verfahrensschritt 101 beginnt.

Alternativ können die Klemmvorrichtungen 3 zunächst an unterschiedlichen Seiten der das Druckbett 4 aufweisenden Tragstruktur 2 befestigt werden, wobei anschließend die unterschiedlichen Randbereiche der Druckfolie 40 an unterschiedlichen Klemmvorrichtungen 3 befestigt werden.

Ferner kann das Verfahren 100 einen weiteren Verfahrensschritt 104 aufweisen, bei dem die Spannvorrichtung 5 entgegen der Spannkraft in Richtung auf das Druckbett 4 hin geschoben wird, etwa bis in die maximal oder vollständig eingeschobene Position, bevor die Klemmvorrichtungen 3 an der Spannvorrichtung 5 und der Montagevorrichtung 6 befestigt werden.

Alternativ kann die Spannvorrichtung 5 entgegen der Spannkraft in Richtung auf das Druckbett 4 hin geschoben werden, etwa bis in die maximal eingeschobene Position, nachdem eine der Klemmvorrichtungen 3 an der Spannvorrichtung 5 befestigt wurde. Dies kann beispielsweise durch einen Handhabungsroboter erfolgen, der über Fixiereinrichtungen in die Halteaufnahmen Y eingreift. Die andere der Klemmvorrichtungen 3 kann dann in einem eingeschobenen Zustand der Spannvorrichtung 5 an der Montagevorrichtung 6 befestigt werden.

Ferner kann eine der Klemmvorrichtungen 3 zunächst an der Montagevorrichtung 6 angebracht werden. Danach kann die Spannvorrichtung 5 entgegen der Spannkraft auf das Druckbett 4 zu geschoben werden, etwa bis in die maximal oder vollständig eingeschobene Position. Danach kann eine weitere der Klemmvorrichtungen 3 an der Spannvorrichtung 5 angebracht werden. Dabei kann die Druckfolie 40 bereits an den Klemmvorrichtungen 3 befestigt sein, bevor diese an der Spannvorrichtung 5 und der Montagevorrichtung 6 angebracht werden.

Alternativ kann die Druckfolie 40 an den an der Spannvorrichtung 5 und der Montagevorrichtung 6 angebrachten Klemmvorrichtungen 3 befestigt werden, bevor die Spannvorrichtung 5 durch die Spannkraft verschoben wird, beispielsweise aus der maximal oder vollständig eingeschobenen Position und in Richtung auf die maximal oder vollständig ausgeschobene Position.

Zumindest das Schieben der Spannvorrichtung 5 in Richtung auf die maximal oder vollständig eingeschobene Position kann manuell durch einen Bediener oder maschinell, etwa durch einen Aktuator oder einen Zylinder oder einen Roboter erfolgen. Beim maschinellen Verschieben kann die Verschiebung direkt in die Spannvorrichtung5 oder über die an der Spannvorrichtung 5 angebrachte Klemmvorrichtung 3 eingeleitet werden oder erfolgen.

Ferner kann das Verfahren 100 einen weiteren Verfahrensschritt 102 aufweisen, bei dem die Spannkraft die Spannvorrichtung 5 weg vom Druckbett 4 zu drücken sucht und die Druckfolie 40 über das Druckbett 4 gespannt hält. Dieser Spannzustand kann aufrecht erhalten werden, während die dreidimensionalen Siebdruckwerkstücke 50 im Verfahrensschritt 101 gedruckt werden.

Ferner kann das Verfahren einen weiteren Verfahrensschritt 105 aufweisen, bei dem die Spannvorrichtung 5 entgegen der Spannkraft in Richtung auf das Druckbett 4 zu verschoben wird, nachdem die Siebdruckwerkstücke 50 gedruckt wurden.

Ferner kann das Verfahren einen weiteren Verfahrensschritt 106 aufweisen, bei dem die Klemmvorrichtungen 3 von der Tragstruktur 2 gelöst werden, um die Druckfolie 40 vom Druckbett 4 zu entnehmen, nachdem die Spannvorrichtung 5 entgegen der Spannkraft in Richtung auf das Druckbett 4 zu verschoben wurde, um eine Lösbarkeit der Klemmvorrichtungen 3 zu gewährleisten.

Das Verfahren 100 kann weiteren einem Verfahrensschritt aufweisen, bei dem die erzeugten dreidimensionale Siebdruckwerkstücke 50 auf der Druckfolie 40 getrocknet und/oder gehärtet werden. Das Trocken und/oder Härten kann erfolgen, während die Klemmvorrichtungen 3, insbesondere zusammen mit der Druckfolie, an der Tragstruktur 2 angebracht sind oder nachdem die Klemmvorrichtungen 3, insbesondere zusammen mit der Druckfolie, von der Tragstruktur 2 entfernt wurden.

Das Verfahren 100 kann weiter einen Verfahrensschritt 107 aufweisen, bei dem die Siebdruckwerkstücke 50 von der Druckfolie 40 gelöst werden. Im Verfahrensschritt 107 kann eine der Klemmvorrichtungen 3, an der die Druckfolie 40 befestigt ist, bewegt werden, um die Druckfolie 40 über eine Scherkante 61 zu ziehen und die Siebdruckwerkstücke 50 hierdurch von der Druckfolie 40 zu lösen.

### BEZUGSZEICHENLSTE

- 1: Werkstückträger
- 2: Tragstruktur
- 3: Klemmvorrichtung
- 4: Druckbett
- 5: Spannvorrichtung
- 6: Montagevorrichtung
- 7: Tragboden
- 8: Lager
- 9: Führungsaufnahme
- 10: Führungsvorsprung
- 11: Führungszunge
- 12: Federvorrichtung
- 13: Federvorrichtungsaufnahme
- 14: Spannvorrichtungsabdeckungsplatte
- 15: Abdeckungsaufnahme
- 16: Montiereinrichtungen
- 17: Montageaufnahmen
- 18: Aufnahme
- 19: Montagevorrichtungsabdeckungsplatte
- 20: Befestigungselement
- 21: Gegenbefestigungselement
- 22: Gegenmontiereinrichtung
- 23: Stiftabschnitt
- 24: Montierflansch
- 25: Montierplatte
- 26: Klemmplatte
- 27,28: Klemmflächen
- 29: Klemmelement
- 30: Vertiefung
- 31: Verbindungsplatte
- 32, 33: Befestigungsbereiche
- 34: Vakuumleitung
- 35: Verbindungsleitung
- 40: Druckfolie
- 50, 50A: dreidimensionalen Siebdruckwerkstücken
- 60: Ablösevorrichtung
- 61: Scherkante
- 100: Verfahren
- 101: Druckfolie bedrucken
- 102: Druckfolie über Druckbett spannen
- 103: Druckfolie mit Klemmvorrichtungen verbinden
- 104: Spannvorrichtung verschieben
- 105: Spannvorrichtung verschieben
- 106: Klemmvorrichtungen von Tragstruktur lösen

- A1: erste Seite des Tragbodens
- A2: zweite Seite des Tragbodens
- B: Betriebsstellung
- D: Längsrichtung
- E1, E2: Enden der Halteaufnahmen
- F: Abstand
- H: Dickenrichtung
- L: Ausdehnung der Führungsaufnahme
- P: vordefinierter Punkt der Tragstruktur
- R: Spannrichtung
- S: Schwerkraftrichtung
- V: Vakuumöffnungen
- V1, 2, 3: Abschnitte der Vakuumöffnungen.
- W: Ausdehnung der Montageaufnehmen
- X: Achse
- Y: Halteaufnahmen

## Patentansprüche

1. Werkstückträger (1), insbesondere für die Herstellung dreidimensionaler Siebdruckwerkstücke (50), mit einer flexiblen Druckfolie (40), die eine mit dreidimensionalen Siebdruckwerkstücken (50) bedruckbare Druckfläche aufweist, mit einer die Druckfolie (40) zumindest abschnittsweise tragenden Tragstruktur (2) und mit zumindest einer Klemmvorrichtung (3) zur kraftschlüssigen Halterung der Druckfolie (40) an und/oder auf der Tragstruktur (2).

2. Werkstückträger (1) nach Anspruch 1, **gekennzeichnet durch** eine Mehrzahl von Klemmvorrichtungen (3), insbesondere zwei Klemmvorrichtungen (3), zur kraftschlüssigen Halterung der Druckfolie (40) an und/oder auf der Tragstruktur (2), wobei die Klemmvorrichtungen (3) bevorzugt eine Klemmanordnung zur kraftschlüssigen Halterung der Druckfolie (40) an und/oder auf der Tragstruktur (2) bilden und/oder wobei die Druckfolie (40) bevorzugt zwischen den Klemmvorrichtungen (3) verläuft.

3. Werkstückträger (1) nach Anspruch 1 oder 2, **dadurch gekennzeichnet, dass** die oder zumindest eine Klemmvorrichtung (3) bewegbar relativ zur Tragstruktur (2) mit der Tragstruktur (2) verbunden ist und/oder dass die oder zumindest eine Klemmvorrichtung (3) unbeweglich relativ zur Tragstruktur (2) mit der Tragstruktur (2) verbunden ist.

4. Werkstückträger (1) nach einem der voranstehenden Ansprüche, **dadurch gekennzeichnet, dass** die Tragstruktur (2) einen Tragboden (7) und ein Druckbett (4) zur Ablage der Druckfolie (40) aufweist, wobei das Druckbett (4) auf dem Tragboden (7) angeordnet ist und/oder gesondert von dem Tragboden (7) ausgebildet ist, und/oder dass das Druckbett (4) eine Auflageseite, die auf dem Tragboden (7) aufliegt, und eine von dem Tragboden (5) weg weisende Ablageseite aufweist, wobei in der Ablageseite bevorzugt Vakuumöffnungen (V) vorgesehen sind, um die Druckfolie (40) mittels Vakuum anzusaugen.

5. Werkstückträger (1) nach einem der voranstehenden Ansprüche, **dadurch gekennzeichnet, dass** die Tragstruktur (2) eine Spannvorrichtung (5) zum Spannen der Druckfolie (40) in eine Spannrichtung (R) aufweist, wobei die Spannvorrichtung (5) bevorzugt relativ zum Druckbett (4) und/oder relativ zum Tragboden (7) bewegbar mit dem Tragboden (7) verbunden ist und/oder wobei die oder zumindest eine Klemmvorrichtung (3) bewegungsübertragend mit der Spannvorrichtung (5) verbunden ist, und/oder dass die oder zumindest eine Klemmvorrichtung (3) wiederholt lösbar an der Spannvorrichtung (5) befestigbar ist.

6. Werkstückträger (1) nach Anspruch 5, **dadurch gekennzeichnet, dass** der Tragboden (7) mehrere laterale Seiten aufweist, wobei die Spannvorrichtung (5) an und/oder angrenzend an einer der lateralen Seiten des Tragbodens (7) angeordnet ist, und/oder dass die an und/oder angrenzend an der einen der lateralen Seiten des Tragbodens (7) angeordnete Spannvorrichtung (5) entgegen einer in die Spannrichtung (R) weisenden elastischen Spannkraft in Richtung einer anderen der lateralen Seiten des Tragbodens (7) verschiebbar ist.

7. Werkstückträger (1) nach einem der vorstehenden Ansprüche, **dadurch gekennzeichnet, dass** die Tragstruktur (2) eine unbeweglich an der Tragstruktur (2) ausgebildete Montagevorrichtung (6) aufweist, insbesondere eine relativ zum Druckbett (4) und/oder relativ zum Tragboden (7) unbeweglich mit dem Tragboden (7) verbundene Montagevorrichtung (6) aufweist, wobei die oder eine Klemmvorrichtung (3) bevorzugt an der Montagevorrichtung (6) und/oder über die Montagevorrichtung (6) entlang einer Spannrichtung unbeweglich an der Tragstruktur (2) befestigbar ist, und/oder dass die oder zumindest eine Klemmvorrichtung (3) wiederholt lösbar an der Montagevorrichtung (6) befestigbar ist.

8. Werkstückträger (1) nach einem der Ansprüche 5 bis 7, **dadurch gekennzeichnet, dass** die Tragstruktur (2) und/oder der Tragboden (7) eine in einer Betriebsstellung (B) des Werkstückträgers (1) entgegen die Schwerkraftrichtung (S) weisende erste Seite (A1) und eine der ersten Seite (A1) gegenüberliegende zweite Seite (A2) aufweist, wobei die Spannvorrichtung (5) zumindest abschnittsweise an der zweiten Seite (A2) angeordnet ist oder verläuft.

9. Werkstückträger (1) nach einem der Ansprüche 5 bis 8, **dadurch gekennzeichnet, dass** der Tragboden (7) ein Lager (8) zum Führen der Bewegung der Spannvorrichtung (5) aufweist, wobei bevorzugt das Lager (8) zumindest abschnittsweise in die zweite Seite (A2) des Tragbodens (7) eingelassen ist und/oder das Lager (8) und die Spannvorrichtung (5) zumindest abschnittsweise komplementär zueinander ausgeformt sind.

10. Werkstückträger (1) nach Anspruch 9, **dadurch gekennzeichnet, dass** die Spannvorrichtung (5) eine Führungsaufnahme (9) aufweist und dass das Lager (8) einen Führungsvorsprung (10) aufweist, wobei der Führungsvorsprung (10) in die Führungsaufnahme (9) eingreift, wobei bevorzugt die Führungsaufnahme (9) entlang der Spannrichtung (R) eine größere Ausdehnung (L) aufweist als der Führungsvorsprung (10) und/oder wobei die Differenz der Ausdehnung (L) der Führungsaufnahme (9) und der Ausdehnung des Führungsvorsprungs (10) die maximale Verschiebbarkeit der Spannvorrichtung (5) relativ zum Druckbett (4) und/oder zum Tragboden (7) in und/oder entgegen der Spannrichtung (R) vorgibt.

11. Werkstückträger (1) nach einem der voranstehenden Ansprüche, **dadurch gekennzeichnet, dass** die zumindest eine Klemmvorrichtung (3) eine Montierplatte (25) zum Montieren der Klemmvorrichtung (3) an der Tragstruktur (2) und eine relativ zur Montierplatte (25) um eine Schwenkachse schwenkbare Klemmplatte (26) aufweist.

12. Werkstückträger (1) nach Anspruch 11, **dadurch gekennzeichnet, dass** die Montierplatte (25) und die Klemmplatte (26) einander gegenüberliegende Klemmflächen (27, 28) aufweisen, wobei im Betrieb der Klemmvorrichtung (3) die Druckfolie (40) zwischen den Klemmflächen (27, 28) verklemmt und hierdurch kraftschlüssig gehalten ist, wobei eine der Klemmflächen (27, 28) bevorzugt ein elastisches Klemmelement (29) aufweist, und/oder dass das elastische Klemmelement (29) zumindest abschnittsweise in einer Vertiefung (30) angeordnet ist, die in der einen der Klemmflächen (27, 28), an der das Klemmelement (29) befestigt ist, vorgesehenen ist.

13. Werkstückträger (1) nach Anspruch 12, **dadurch gekennzeichnet, dass** die Klemmvorrichtung (3) zumindest eine Halteaufnahme (Y) zum Halten und/oder Handhaben durch eine externe Handhabungsvorrichtung aufweist und/oder zwei entlang einer Richtung der Schwenkachse oder entlang einer Richtung parallel zur Schwenkachse voneinander beanstandete Halteaufnahmen (Y) aufweist, wobei bevorzugt die Halteaufnahmen (Y) entlang einer Richtung der Schwenkachse oder einer Richtung parallel zur Schwenkachse jeweils voneinander weg weisende Enden (E1) der Halteaufnahmen (Y) quer zur Schwenkachse verlaufende lichte Weiten aufweisen, die größer sind, als quer zur Schwenkachse verlaufende lichte Weiten zweier aufeinander zu weisender Enden (E2) der Halteaufnahmen (Y).

14. Tragstruktur (2), insbesondere für einen Werkstückträger (1) für die Herstellung dreidimensionaler Siebdruckwerkstücke (50), mit einem Druckbett (4) zur Ablage einer eine bedruckbare Druckfläche aufweisenden Druckfolie (40) und mit einer Spannvorrichtung (5) sowie einer Montagevorrichtung (6), wobei die Spannvorrichtung (5) und die Montagevorrichtung (6) an unterschiedlichen und vorzugsweise einander gegenüberliegenden Seiten des Druckbetts (4) angeordnet sind und wobei die Spannvorrichtung (6) und die Montagevorrichtung (6) Montiereinrichtungen (16) aufweisen, die mit gegenüberliegende Enden einer Druckfolie (50) in Wirkverbindung bringbar sind, wobei die Spannvorrichtung (6) bevorzugt in einer Orientierung entgegen einer in eine Spannrichtung (R) weisenden elastischen Spannkraft auf das Druckbett (4) hin verschiebbar ist.

15. Verfahren (100) zur Herstellung von dreidimensionalen Siebdruckwerkstücken, insbesondere mit einem Werkstückträger nach einem der vorstehenden Ansprüche 1 bis 13, bei dem eine Druckfolie wiederholt per Siebdruck bedruckt wird (101), um in mehreren Druckvorgängen dreidimensionale Siebdruckwerkstücke zu erzeugen.
